# EUROPEAN PATENT SPECIFICATION

(11) **EP 3 520 300 B1**
(45) Date of publication and mention of the grant of the patent: **05.01.2022**
(21) Application number: 17784415.6
(22) Date of filing: 29.09.2017
(51) Int. Cl.: H04L 5/00

(54) **SYSTEMS AND METHODS FOR CONFIGURING MEASUREMENT GAPS AND SOUNDING REFERENCE SIGNAL SWITCHING**
SYSTEME UND VERFAHREN ZUR KONFIGURATION VON MESSLÜCKEN UND TONREFERENZSIGNALUMSCHALTUNG
SYSTÈMES ET PROCÉDÉS DE CONFIGURATION D'INTERVALLES DE MESURE ET DE COMMUTATION DE SIGNAL DE RÉFÉRENCE DE SONDAGE

(30) Priority: 30.09.2016 US 201662402144 P
(43) Date of publication of application: 07.08.2019
(73) Proprietor: Telefonaktiebolaget LM Ericsson (PUBL), 164 83 Stockholm (SE)
(72) Inventor: SIOMINA, Iana, SE-183 30 Täby (SE); KAZMI, Muhammad, SE-174 64 Sundyberg (SE); RAHMAN, Imadur, SE-191 46 Sollentuna (SE)
(74) Representative: Ericsson
(86) International application number: PCT/SE2017/050951
(87) International publication number: WO 2018/063075

(56) References cited:
- EP-A1- 2 953 392
- HUAWEI ET AL: "Details on timing advance for SRS on TDD CCs without PUSCH", 3GPP DRAFT; R1-166129, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051140075, Retrieved from the Internet: URL:http://www.3gpp.org/ftp/Meetings_3GPP_ SYNC/RAN1/Docs/ [retrieved on 2016-08-21]

## Description

### TECHNICAL FIELD

The present disclosure relates, in general, to wireless communications and, more particularly, a radio node and a method therein for configuring measurement gaps and sounding reference signal switching.

### BACKGROUND

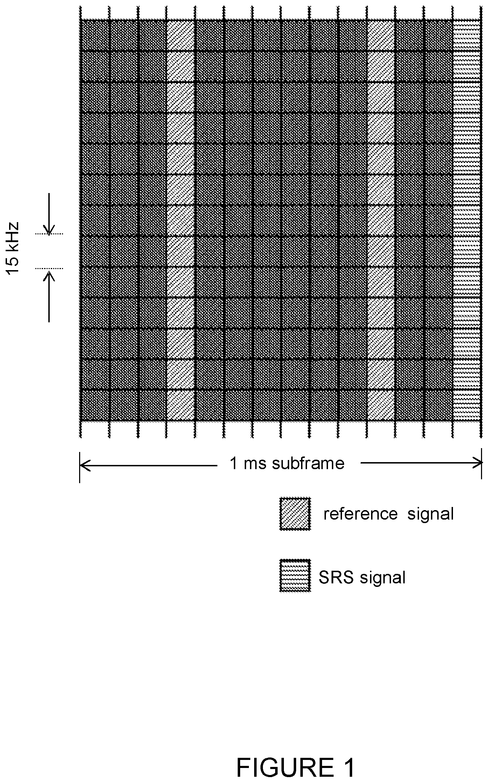

Sounding reference signals (SRS) are known signals that are transmitted by wireless devices, which may include user equipments (UEs), so that the network node, which may include an eNodeB, can estimate different uplink-channel properties. These estimates may be used for uplink scheduling and link adaptation but also for downlink multiple antenna transmission, especially in case of time-division duplexing (TDD) where the uplink (UL) and downlink (DL) use the same frequencies. FIGURE 1 illustrates an uplink transmission subframe of SRS having a time duration of a single OFDM symbol.

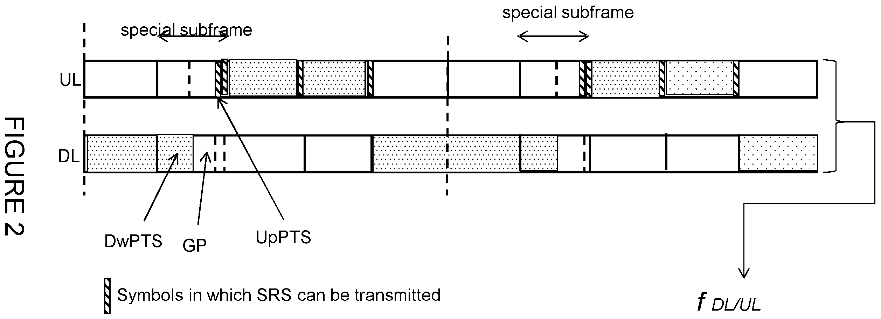

SRS can be transmitted in the last symbol of a 1 ms uplink subframe, and for the case with TDD, the SRS can also be transmitted in the special slot Uplink Pilot Time Slot (UpPTS). The length of UpPTS can be configured to be one or two symbols. FIGURE 2 illustrates an example for TDD. More specifically, FIGURE 2 illustrates an example for TDD with 3DL:2UL within a 10 ms radio frame. Up to eight symbols may be set aside for SRS.

The configuration of SRS symbols, such as SRS bandwidth, SRS frequency domain position, SRS hopping pattern and SRS subframe configuration are set semi-statically as a part of radio resource control (RRC) information element.

There are two types of SRS transmissions in LTE UL. They are periodic and aperiodic SRS transmission. Periodic SRS is transmitted at regular time instances as configured by means of RRC signaling. Aperiodic SRS is one shot transmission that is triggered by signaling in Physical Data Control Channel (PDCCH).

There are also two different configurations related to SRS. The first configuration is cell specific SRS configuration, which indicates what subframes may be used for SRS transmissions within the cell. FIGURE 2 illustrates an example cell specific SRS configuration.

The second configuration related to SRS is wireless device specific configuration. The wireless device specific configuration indicates to the terminal a pattern of subframes (among the subframes reserved for SRS transmission within the cell) and frequency domain resources to be used for SRS transmission of that specific wireless device. It also includes other parameters that the wireless device shall use when transmitting the signal, such as frequency domain comb and cyclic shift. This means that sounding reference signals from different wireless devices can be multiplexed in the time domain, by using UE-specific configurations such that the SRS of the two wireless devices are transmitted in different subframes.

Furthermore, within the same symbol, sounding reference signals can be multiplexed in the frequency domain. The set of subcarriers may be divided into two sets of subcarriers or combinations with the even and odd subcarriers, respectively, in each such set. Additionally, wireless devices may have different bandwidths to get additional frequency domain multiplexing (FDM). The combination enables FDM of signals with different bandwidths and also overlapping bandwidths. Additionally, code division multiplexing can be used. Then different users can use exactly the same time and frequency domain resources by using different shifts of a basic base sequence.

In LTE networks, there are many kinds of downlink heavier traffic, which leads to more number of aggregated downlink component carriers (CC) than the number of aggregated uplink CCs. For the existing wireless device categories, the typical carrier aggregation (CA) capable wireless devices only support one or two uplink CCs.

For the carrier supporting both uplink and downlink, transmit diversity based feedback without precoding matrix indicators (PMI) and with SRS is beneficial as channel reciprocity can be used. However, the wireless device generally has the capability of aggregating larger number of DL carriers than that in the UL. As a result, some of TDD carriers with DL transmission for the wireless device will have no UL transmission including SRS, and channel reciprocity cannot be utilized for these carriers. Such situations will become more severe with CA enhancement of up to 32 CCs where a large portion of CCs are TDD. Allowing fast carrier switching to and between TDD UL carriers can be a solution to allow SRS transmission on these TDD carriers and should be supported.

To enable inter-frequency and inter-Radio Access Technology (inter-RAT) measurements in RRC connected state in E-UTRAN and UTRAN the network may configure the measurement gaps which provide some time for the wireless device to switch reception frequency, make the radio measurement, and switch back to the serving frequency. During measurements gaps, the wireless device is not able to receive or transmit on the serving carrier frequency.

Two periodic measurement gap patterns both with a measurement gap length of 6 ms are defined for LTE in TS 36.133 v 13.3.0. The first is a measurement gap pattern #0 with a period of 40 ms. The second is measurement gap pattern #1 with a period of 80 ms.

The measurement gaps are configured by means of MeasGapConfig in RRC signaling, which contains the release command and the gap offset (0.39 or 0.79, respectively). Each gap starts at a frame with a system frame number (SFN) and a subframe with an index meeting the following condition: SFN mod T = FLOOR (gapOffset/10), subframe = gapOffset mod 10, with T = MGRP/10, and MGRP is 40 or 80.

In addition to network-configured measurement gaps, the wireless device may also use autonomous gaps for, for example, reading system information, acquiring CGI, and performing other operations.

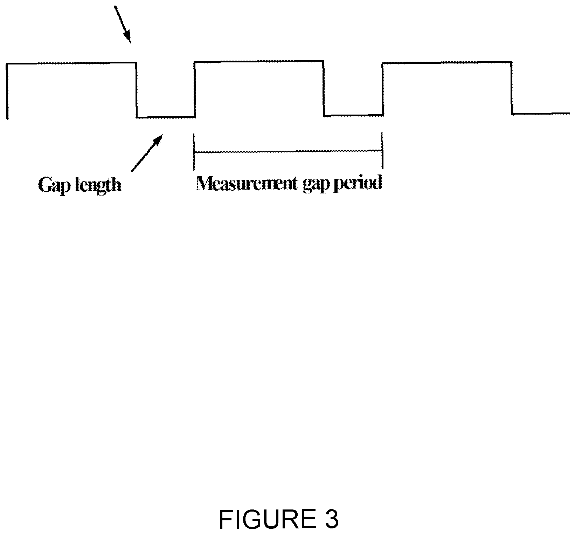

Additional measurement gap patterns of shorter measurement gap lengths, such as, for example, 2 ms, 3 ms, 4 ms, and other lengths have also been studied and captured in TR 36.984 v 13.0.0. Likewise, gap patterns with longer periodicities such as, for example, 80 ms, have also been studied and captured in TR 36.984 v 13.0.0. These measurement gaps may be interchangeably called small gaps, shorter gaps, gaps for synchronous operation, or another suitable term. FIGURE 3 illustrates example parameters related to measurement gap pattern.

At least two problems can be envisioned with SRS switching and measurements gaps used in parallel. First, measurements gaps may block SRS transmissions. Second, wireless device behavior is undefined in case the wireless device is configured with SRS transmissions and needs to perform an operation requiring measurement gaps.

HUAWEI ET AL: "Details on timing advance for SRS on TDD CCs without PUSCH",3GPP DRAFT; R1-166129, 3RD GENERATION PARTNERSHIP PROJECT (3GPP), discloses various options for Timing Advance (TA) for SRS on TDD CCs without a Physical Uplink Shared Channel (PUSCH).

### SUMMARY

To address the foregoing problems with existing solutions, disclosed are systems and methods for configuring measurement gaps and sounding reference signal (SRS) switching.

According to certain embodiments, a method for configuring measurement gaps and SRS switching is implemented in a radio node as defined in claim 1.

According to certain embodiments, a radio node for configuring measurement gaps and SRS switching is provided as defined in claim 9.

Further aspects of the invention are provided according to the appended dependent claims.

Certain embodiments of the present disclosure may provide one or more technical advantages. For example, certain embodiments may ensure the performance of inter-frequency and inter-RAT measurements when SRS switching is configured. Another technical advantage may be that certain embodiments ensure that the performance of SRS switching when measurement gaps are used. Still another technical advantage may be well-defined wireless device behavior in case the wireless device is using measurement gaps and configured with SRS switching.

Other advantages may be readily apparent to one having skill in the art. Certain embodiments may have none, some, or all of the recited advantages.

### BRIEF DESCRIPTION OF THE DRAWINGS

For a more complete understanding of the disclosed embodiments and their features and advantages, reference is now made to the following description, taken in conjunction with the accompanying drawings, on which:
FIGURE 1 illustrates an uplink transmission subframe of sounding reference signal (SRS) having a time duration of a single orthogonal frequency division multiplexing symbol;
FIGURE 2 illustrates an exemplary time division duplex (TDD) subframe;
FIGURE 3 illustrates example parameters related to measurement gap pattern;
FIGURE 4 illustrates an exemplary network for configuring measurement gaps and SRS switching, in accordance with certain embodiments;
FIGURE 5 illustrates an exemplary wireless device for configuring measurement gaps and SRS switching, in accordance with certain embodiments;
FIGURE 6 illustrates as an exemplary CC combination, in accordance with certain embodiments;
FIGURES 7A-7F illustrate exemplary methods by a wireless device for configuring measurement gaps and SRS switching, in accordance with certain embodiments;
FIGURE 8 illustrates an example virtual computing device for configuring measurement gaps and SRS switching, in accordance with certain embodiments;
FIGURE 9 illustrates another example virtual computing device for configuring measurement gaps and SRS switching, in accordance with certain embodiments;
FIGURE 10 illustrate an example network node for configuring measurement gaps and SRS switching, in accordance with certain embodiments;
FIGURES 11A-11D illustrate exemplary methods for configuring measurement gaps and SRS by a network node, in accordance with certain embodiments;
FIGURE 12 illustrates another example virtual computing device for configuring measurement gaps and SRS switching, in accordance with certain embodiments;
FIGURE 13 illustrates another example virtual computing device for configuring measurement gaps and SRS switching, in accordance with certain embodiments; and
FIGURE 14 illustrates an exemplary radio network controller or core network node for configuring measurement gaps and SRS switching, in accordance with certain embodiments.

### DETAILED DESCRIPTION

Disclosed are systems and methods for configuring measurement gaps and sounding reference signal switching. Certain embodiments may ensure the performance of inter-frequency and inter-Radio Access Technology (inter-RAT) measurements when sounding resource signal (SRS) switching is configured. Additionally or alternatively, certain embodiments ensure that the performance of SRS switching when measurement gaps are used. Particular embodiments are described in FIGURES 1-14 of the drawings, like numerals being used for like and corresponding parts of the various drawings.

The term radio access technology, or RAT, may refer to any RAT such as, for example, UTRA, E-UTRA, narrow band internet of things (NB-IoT), WiFi, Bluetooth, next generation RAT (NR), 4G, 5G, or other suitable technology. Any of the first and the second nodes may be capable of supporting a single or multiple RATs.

The term measurement gaps used herein may include, for example, network-configured measurement gaps and/or UE-configured measurement gaps or autonomous gaps. Measurement gaps may be common for (e.g., shared by) multiple carrier frequencies and/or RATs or may be specific to one or a group of them. Some non-limiting examples of measurement gaps are as described in the background section.

The term time resource used herein may correspond to any type of physical resource or radio resource expressed in terms of length of time. Examples of time resources are: symbol, time slot, subframe, radio frame, TTI, interleaving time, etc.

The radio signals used herein may include any radio signal, physical channel or logical channel, e.g., reference signals, synchronization signals, signals used for positioning measurements, control channel, data channel, multicast or broadcast channel, channel carrying specific type of information e.g. system information, etc. The signals/channels may be, e.g., UE-specific or TP-specific or cell-specific or area-specific. The signals/channels may be transmitted in a unicast, multicast or broadcast manner.

The term radio measurement used herein may refer to any measurement performed on radio signals. Radio measurements can be absolute or relative. Radio measurements can be e.g. intra-frequency, inter-frequency, CA, etc. Radio measurements can be unidirectional (e.g., DL or UL) or bidirectional (e.g., RTT, Rx-Tx, etc.). Some examples of radio measurements: timing measurements (e.g., TOA, timing advance, RTT, RSTD, SSTD, Rx-Tx, propagation delay, etc.), angle measurements (e.g., angle of arrival), power-based measurements (e.g., received signal power, RSRP, received signal quality, RSRQ, SINR, SNR, CSI, CQI, PMI, interference power, total interference plus noise, RSSI, noise power, etc.), cell detection or identification, beam detection or beam identification, system information reading, RLM, etc.

The term reference signal (RS) used herein may refer to any type of reference signal or more generally physical radio signals transmitted by the UE in the UL to enable the network node to determine the UL signal quality e.g. UL SNR, SINR, etc. Examples of such reference signals are sounding reference signals (SRS) or other SRS-type signals, in particular 3GPP LTE SRS, as just one example. Other examples of reference signals include DMRS, UE specific reference or pilot signals etc. The embodiments are applicable to any type of RS i.e. switching of carrier transmitting any type of RS.

In some embodiments, SRS switching and SRS carrier based switching may be used interchangeably to describe transmitting SRS on different carriers. SRS switching may be based on a time and/or frequency domain pattern. SRS switching may further involve SRS transmission types described in Section 2.1.1 or other SRS transmission types. More example scenarios are described below.

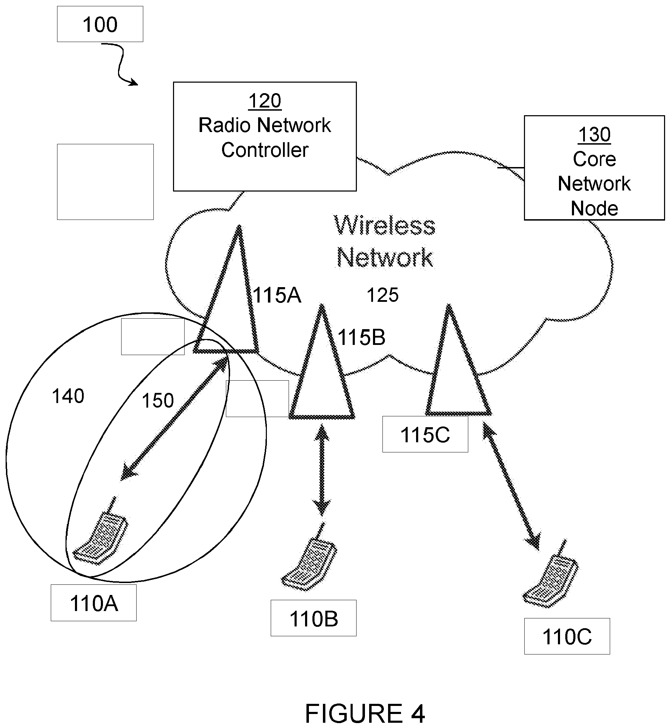

FIGURE 4 is a block diagram illustrating an embodiment of a network 100 for configuring measurement gaps and sounding reference signal switching, in accordance with certain embodiments. Network 100 includes one or more radio nodes that may communicate via network 100. Radio nodes may include one or more wireless devices 110A-C, which may be interchangeably referred to as wireless devices 110 or UEs 110, and network nodes 115A-C, which may be interchangeably referred to as network nodes 115 or eNodeBs 115, radio network controller 120, and a core network node 130. A wireless device 110 may communicate with network nodes 115 over a wireless interface. For example, wireless device 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, wireless devices 110 may have D2D capability. Thus, wireless devices 110 may be able to receive signals from and/or transmit signals directly to another wireless device 110. For example, wireless device 110A may be able to receive signals from and/or transmit signals to wireless device 110B.

In certain embodiments, network nodes 115 may interface with a radio network controller 120. Radio network controller 120 may control network nodes 115 and may provide certain radio resource management functions, mobility management functions, and/or other suitable functions. In certain embodiments, radio network controller 120 may interface with core network node 130 via an interconnecting network 125. The interconnecting network 125 may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

Core network node 130 may manage the establishment of communication sessions and provide various other functionality for wireless communication device 110. Wireless communication device 110 exchanges certain signals with core network node 130 using the non-access stratum layer. In non-access stratum (NAS) signaling, signals between wireless communication device 110 and core network node 130 pass transparently through network nodes 120.

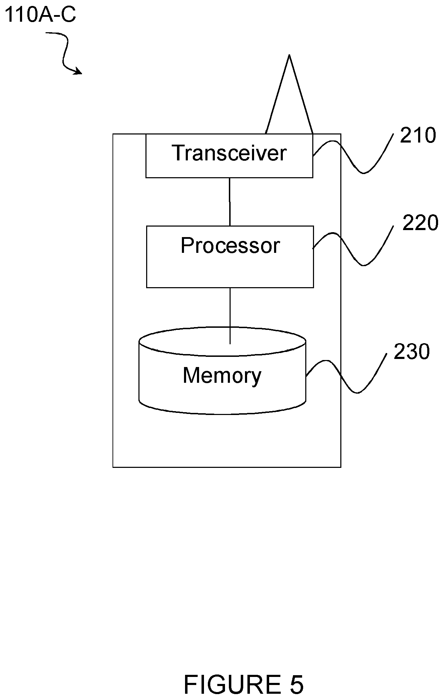

As described above, example embodiments of network 100 may include one or more wireless devices 110, and one or more different types of network nodes capable of communicating (directly or indirectly) with wireless devices 110. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Also, in some embodiments, generic terminology, "radio network node" (or simply "network node") is used. It can be any kind of network node, which may include a Node B, base station (BS), multistandard radio (MSR) radio node such as MSR BS, eNode B, network controller, radio network controller (RNC), base station controller (BSC), relay donor node controlling relay, base transceiver station (BTS), access point (AP), transmission points, transmission nodes, RRU, RRH, nodes in distributed antenna system (DAS), core network node (e.g. MSC, MME etc.), O&M, OSS, SON, positioning node (e.g. E-SMLC), MDT, or any suitable network node. Each of wireless communication device 110, network node 115, radio network controller 120, and core network node 130 include any suitable combination of hardware and/or software. Example embodiments of wireless devices 110, network nodes 115, and other network nodes (such as radio network controller or core network node) are described in more detail with respect to FIGURES 5, 10, and 14, respectively.

Although FIGURE 4 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). In certain embodiments, wireless communication device 110, network node 120, and core network node 130 use any suitable radio access technology, such as Long Term Evolution (LTE), LTE-Advanced, LTE-Advanced Pro, UMTS, HSPA, GSM, cdma2000, WiMax, Wi-Fi^{™}, another suitable radio access technology, or any suitable combination of one or more radio access technologies. For purposes of example, various embodiments may be described within the context of certain radio access technologies. However, the scope of the disclosure is not limited to the examples and other embodiments could use different radio access technologies.

Certain exemplary deployment scenarios involving SRS carrier based switching are described. In certain embodiments, for example, wireless device 110A may be served by a first network node 115A with a primary serving cell (PCell) 140 operating on a first carrier frequency (f1). Wireless device 110A may also be capable of being served by a secondary serving cell (SCell) 150 also known as a first SCell. According to certain embodiments, wireless device 110A may further be capable of being served by two or more SCells 150. In such a scenario, the first SCell 150 may operate on a second carrier frequency (f2) and the second SCell 150 may operate on a third carrier frequency (f3). The same applies for more than two SCells 150. As described herein, the carrier f1 is interchangeably called as PCC, while carriers f2, f3, ..., f(n) may interchangeably be called as SCC1, SCC2, ..., SCC(n-1) etc., respectively.

In certain embodiments, f1, f2, and f3 belong to the licensed spectrum. However, other combinations are also possible. For example, in certain embodiments, the carrier f1 and f3 or may belong to a licensed spectrum or band, whereas f2 belongs to an unlicensed spectrum or frequency band. In an unlicensed spectrum or band, contention based transmission is allowed. As such, two or more devices (wireless device or network nodes) can access even the same part of spectrum based on certain fairness constraints. One such constraint may include listen-before-talk (LBT). In this case, no operator (or user or transmitter) owns the spectrum. In a licensed spectrum or licensed band, only contention free transmission is allowed. Thus, only devices (wireless device or network nodes) allowed by the owner of the spectrum license can access the licensed spectrum. In one example scenario, all carriers may be in unlicensed spectrum, or in a license shared spectrum or in a spectrum where LBT is required.

In certain embodiments, the CCs and the corresponding serving cells of a wireless device 110A may be all in the same node 115. In another example, at least two of them may be in different nodes, which may be co-located or non-collocated.

In certain embodiments, all the CCs and the corresponding serving cells of a wireless device 110A may be configured in the same timing advance group (TAG) such as for example, pTAG. In another example, some CCs and the corresponding serving cells of a wireless device 110A may be configured in one TAG such as pTAG and the remaining CCs may be configured in another TAG such as sTAG. In yet another example, the wireless device 110 may be configured with two or more TAGs.

The above scenarios may also include DC or multi-connectivity operation performed based on corresponding CA configurations, where PSCell in different embodiments may belong, for example, to a set of SCells.

In a further example, the first and the second SRS transmissions may include different SRS type. In another example, when the first and/or the second SRS transmission is a SRS switching transmission it has aperiodic SRS type (and may be triggered by SRS switching configuration); while when the first and/or the second SRS transmission is a non SRS switching transmission it may or may not has aperiodic SRS type.

In certain embodiments, the SRS switching may be controlled by the network node and/or by the wireless device.

Switching among carriers and/or antennas during SRS switching may also cause some interruptions, e.g., to PCell or activated SCell, which may be due to wireless device 110A reconfiguration such as configuring and/or activating target carriers (to which the SRS transmission is switched to), deconfiguring and/or deactivating source carriers (from which SRS transmission is switched), delays, reduced performance, etc.

FIGURE 5 illustrates an example wireless device 110A-C for configuring measurement gaps and sounding reference signal switching, in accordance with certain embodiments. As depicted, wireless device 110A-C includes transceiver 210, processor 220, and memory 230. In some embodiments, transceiver 210 facilitates transmitting wireless signals to and receiving wireless signals from network node 115A-C (e.g., via an antenna), processor 220 executes instructions to provide some or all of the functionality described above as being provided by wireless device 110A-C, and memory 230 stores the instructions executed by processor 220. Examples of a wireless device 110A-C are provided above.

Processor 220 may include any suitable combination of hardware and software implemented in one or more modules to execute instructions and manipulate data to perform some or all of the described functions of wireless device 110. In some embodiments, processor 220 may include, for example, processing circuitry, one or more computers, one or more central processing units (CPUs), one or more microprocessors, one or more applications, and/or other logic.

Memory 230 is generally operable to store instructions, such as a computer program, software, an application including one or more of logic, rules, algorithms, code, tables, etc. and/or other instructions capable of being executed by a processor. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other embodiments of wireless device 110A-C may include additional components beyond those shown in FIGURE 5 that may be responsible for providing certain aspects of the wireless device's functionality, including any of the functionality described above and/or any additional functionality (including any functionality necessary to support the solution described above).

In certain embodiments, wireless device 110A-C may include SRS carrier-based switching capabilities. SRS switching herein may include SRS transmissions over N multiple carriers for a specific purpose, where M<N, M is the UE capability of simultaneous/overlapping transmissions and N is the number of carriers with SRS transmissions, in certain embodiments. As described herein, the SRS switching further involves K<M carriers where K carriers may not be used for switching to/from (i.e., switching may not need to be activated/deactivated prior/after the SRS transmission).

According to certain embodiments, SRS carrier switching includes SRS switching for N - K carriers.

According to certain embodiments, SRS switching (a.k.a. SRS switching or switching SRS transmissions as described above) may involve at least one of:
- starting first SRS transmission(s) (or starting/resuming the using the corresponding SRS configuration),
- stopping second SRS transmission(s) (or stopping/suspending the using the corresponding SRS configuration),
where the first and second SRS transmissions may be on the same or different carrier frequencies and/or from the same or different one or more antennas or antenna ports.

The same or different carrier frequencies may belong to licensed and/or unlicensed spectrum, same RAT or different RATs. At least one of the first and the second transmissions include SRS switching transmission, but one of the first and the second transmissions may be SRS transmissions not including an SRS switching transmission but affected by the SRS switching transmission. In one example, the second SRS transmission (including non SRS switching transmission) is configured on the same carrier before the first SRS transmission (including a SRS switching transmission) is transmitted. In another example, the first and the second SRS transmissions include SRS switching transmissions, and the switching is from the second to the first SRS transmission which may be on different carriers. In yet another example, the first SRS transmission is non SRS switching transmission and it is transmitted after the second SRS transmission (including an SRS switching transmission) is switched e.g. to another carrier and/or antenna port (and is thus stopped or suspended on this carrier and/or antenna port). In yet another example, the first and the second SRS transmissions include SRS switching transmissions, and the switching is from the second to the first SRS transmission which may be on different antenna ports while on the same or different carriers. In yet another example, SRS switching may include carrier based SRS switching and/or antenna based SRS switching.

In a further example embodiment, the first and the second SRS transmissions may include different SRS types. In another example, when the first and/or the second SRS transmission is an SRS switching transmission it has aperiodic SRS type (and may be triggered by SRS switching configuration); while when the first and/or the second SRS transmission is a non SRS switching transmission it may or may not has aperiodic SRS type.

As described herein, the SRS switching may be controlled by the network node 115A-C and/or by the wireless device 110A-C.

Switching among carriers and/or antennas during SRS switching may also cause some interruptions, e.g., to PCell or activated SCell, which may be due to wireless device reconfiguration such as configuring and/or activating target carriers (to which the SRS transmission is switched to), deconfiguring and/or deactivating source carriers (from which SRS transmission is switched), delays, reduced performance, etc.

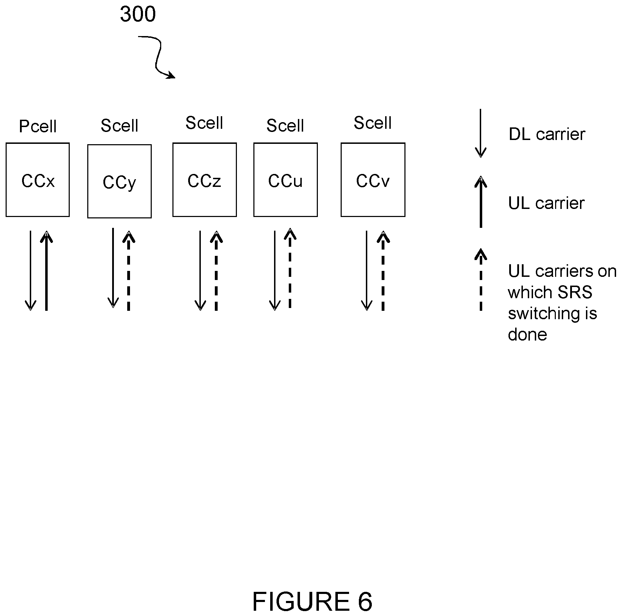

FIGURE 6 illustrates as an exemplary CC combination 300, according to certain embodiments. As depicted, there is an arrangement with 5DL CA and 2UL (or more UL) CA operation. This example shows a 5DL CA together with 2 UL CA, where one UL is fixed in the PCell and the SRS switching is done on one of the SCells (e.g., from SCell1 to SCell2). So, at any point of time, it's a 2UL CA combination. The same example scenario can also be shown with other numbers aggregated CCs in DL and UL, respectively. The carriers, such as for example, CCy, CCz, CCu, and CCv, may be in different bands also. For example, CCy can be in any band below 1GHz, CCz can be in any band around 2GHz and CCu can be any band in 3.5GHz. In the figure below, the CA combinations can be TDD-TDD and/or FDD-TDD.

The term 'served or being served' herein means that the wireless device 110A-C is configured with the corresponding serving cell and can receive from and/or transmit data to the network node 115A-C on the serving cell e.g. on PCell or any of the SCells. The data is transmitted or received via physical channels e.g. PDSCH in DL, PUSCH in UL etc.

The wireless device 110A-C may be requested to switch SRS transmission to one or more serving cells by the network 100. In some embodiments one or more SRS switching messages or commands may be received by the wireless device 110A-C via RRC signaling. In some embodiments one or more SRS switching messages or command may be received by the wireless device 110A-C via MAC CE command.

For example, according to certain embodiments, the following signaling may apply:
- receiving a first serving cell SRS switching request message or command from a second network node for switching SRS carrier from the first serving cell;
- receiving a second serving cell SRS switching request message or command from a third network node for switching SRS carrier from the second serving cell; and
- receiving a third serving cell SRS switching request message or command from a fourth network node for switching SRS carrier from the third serving cell.

According to certain embodiments, at least some of the first, second, third and fourth network nodes are the same or are co-located at the same site or location. For example, in such embodiments, wireless device 110A-C may receive one or more messages or command for switching SRS carrier(s) from one or more serving cells from the first network node 115A-C. Also for example in such embodiments, wireless device 110A-C may receive one or more messages for SRS switching of one or more serving cells from the PCell.

According to certain embodiments, any combination of the first, second, third and fourth network nodes 115A-C may be located at different sites or locations or may be logically different nodes that may still be co-located. In such embodiments, wireless device 110A-C may receive one or more messages for SRS carrier switching from one or more serving cells from the respective serving cells.

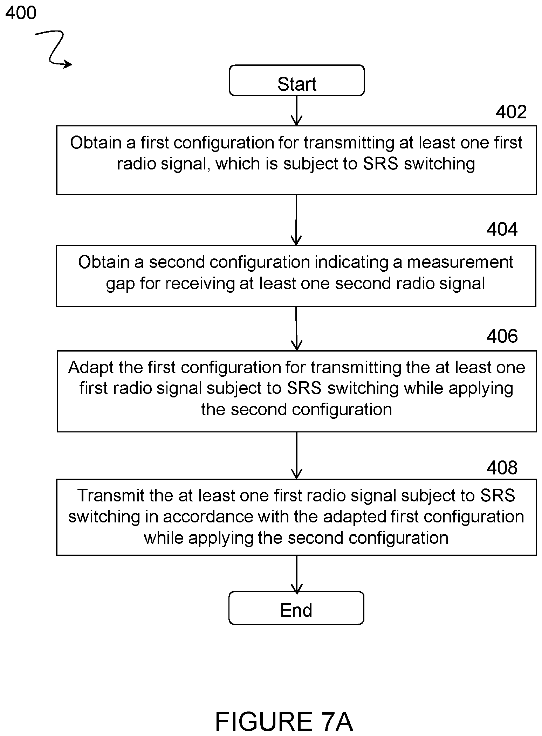

The embodiments are described for at least one serving cell in unlicensed spectrum or in some cases for two serving cells with one on licensed and one on unlicensed spectrum or frequency bands. However the embodiments are applicable to any number of serving cells whereas at least one serving cell operates on a CC belonging to an unlicensed spectrum or frequency band. The embodiments are also applicable for at least one or more serving cells in unlicensed spectrum where all involved serving cells are in unlicensed spectrum. FIGURES 7A-7F illustrate exemplary methods by a wireless device 110A-C for configuring measurement gaps and sounding reference signal switching, in accordance with certain embodiments. Specifically, FIGURE 7A illustrates an exemplary method 400 in a wireless device 110A-C for configuring measurement gaps and SRS switching, in accordance with certain embodiments. The method begins at step 402 when a first configuration for transmitting at least one first radio signal subject to SRS switching is obtained by wireless device 110A.

According to a particular embodiment the at least one radio signal subj ect to SRS switching may include at least one RACH SRS signal. In certain embodiments, the first configuration may be received as a message, indication or configuration received from another node such as, for example, a network node via higher layers and/or physical layer. In particular embodiments, the first configuration may include a SRS carrier switching configuration, a SRS transmission configuration related to SRS switching, or another suitable SRS related configuration.

According to certain other embodiments, the first configuration may be a pre-defined configuration. For example, the first configuration may include a SRS switching pattern.

According to still other embodiments, the first configuration may be obtained in response to a triggering condition or event which may trigger one or more transmissions related to SRS switching. For example, in a particular embodiment, the collapse of a SRS transmission timer for any carrier may trigger the first configuration.

At step 404, wireless device 110A-C obtains a second configuration indicating a measurement gap for receiving at least one second radio signal. According to certain embodiments, the measurement gap may be network configured and/or UE configured. In other embodiments, the measurement gaps may be autonomous gaps.

According to certain embodiments, the second configuration may be received as a message, indication, or configuration received from another node such as, for example, a network node. For example, the second configuration may be include or be included with a measurement configuration, system information configuration.

According to certain other embodiments, the second configuration may be pre-defined. Alternatively, the second configuration may be obtained in response to the application of one or more rules. In a particular embodiment, the second configuration may include or be associated with a pre-defined configuration for transmissions in certain subframes and/or with certain periodicity of signals to be received to perform an operation such as, for example, SI reading, cell identification, positioning, or another suitable operation.

According to certain other embodiments, one or more triggering events and/or conditions may trigger one or more operations based on reception of radio signals which may need measurement gaps.

In still other embodiments, the second configuration may be determined based on UE capability. For example, the second configuration may relate to whether the wireless device 110A-C is capable of performing inter-frequency and/or inter-RAT measurements without measurement gaps in general or for a specific purpose.

At step 406, wireless device 110A-C adapts the first configuration for transmitting the at least one first radio signal subject to SRS switching while applying the second configuration. In a particular embodiment, wireless device 110A-C may receive the adapted first configuration from a network node 115A-C. According to a particular embodiment, wireless device 110A-C may transmit the adapted first configuration to a network node 115A-C or another wireless device 110A-C.

The adapted first configuration changes a periodicity for switching between carriers to avoid or reduce an overlap with the measurement gap of the second configuration. According to certain embodiments, adapting the first configuration may include obtaining at least one performance characteristic, requirement, or target and adapting the first configuration in accordance with said at least one performance characteristic, requirement, or target. According to a particular embodiment, for example, wireless device 110A-C may determine that that one or more measurement requirements will be met while the wireless device 110A-C performs measurements associated with the at least one second signal according to the second configuration and transmits the at least one first signal according to the adapted first configuration.

According to various particular embodiments, the adapted first configuration may identify a percentage of SRS transmissions allowed for transmission by the wireless device 110A-C, a percentage of SRS transmissions to be dropped by the wireless device 110A-C, a number of SRS transmissions allowed for transmission by the wireless device 110A-C, and/or a number of SRS transmissions to be dropped by the wireless device 110A-C. Additionally or alternatively, the adapted first configuration may identify a time resource for transmitting the at least one first signal to reduce an overlap with the measurement gap, a time resource for transmitting the at least one first signal that does not occur during the measurement gap, and/or a time resource for not transmitting the at least one first signal to avoid or reduce an overlap with the measurement gap.

Some examples of the performance characteristic, requirement or target are: intra-frequency, inter-frequency and/or inter-RAT measurement time, measurement period, cell identification, SI reading time, CGI identification time, positioning (e.g., OTDOA or E-CID) measurement period, RLM time, measurement accuracy (e.g. ± 3 dB of RSRP accuracy etc.), minimum number of identified cells to be measured by the wireless device 110A-C, signal level down to which the requirement is to be met etc. The requirement may also be expressed in terms of the number of lost packets, This may further be expressed in terms of total number of missed ACK/NACK in response to continuous transmission of data to wireless device 110A-C from its serving cell over certain time period e.g. measurement time period.

According to various embodiments, the term requirements may also be interchangeably called as measurement requirement, performance requirement etc. Examples for radio measurement types are described above.

In embodiments, the adapted configuration may be obtained based on one or more of:
- Message/indication/configuration received from another node (e.g., network node), e.g., the UE may receive the adapted configuration or parameter(s) controlling how the UE would adapt;
- Pre-defined rule e.g. rules pre-defined in the standard.
- Priority(ies) (e.g., between SRS switching operation or transmissions related to SRS switching and using measurement gaps or operations that may need measurement gaps), e.g., the priorities may be pre-defined or received from another node or determined based on a pre-defined rule.
- History

Beside changing a periodicity for switching between carriers, in certain embodiments, the adapted configuration of transmission(s) of the first radio signals may also include, for example, one or more of:
- Adapting carrier switching for SRS transmissions purpose (e.g., adapting the time when to switch to a carrier or from a carrier or switching periodicity, etc.), e.g.,
   ∘ Fully or partly avoiding or reducing the overlap between switching or related interruptions time with measurement gaps or adjacent to gaps time resources
- Transmitting / not transmitting based on a priority (e.g., not transmitting SRS when measurement gaps are used in general or for a specific purpose)
- Transmitting of at least N or X% of transmissions,
- Dropping of at most M or Y% transmissions,
- Transmitting in a time resource to avoid/reduce/minimize overlap with measurement gaps
- Transmitting in a different (e.g., pre-defined or defined based on a rule) time resource than originally scheduled, to avoid overlap with measurement gaps
- Not transmitting (e.g., avoiding transmitting or dropping a transmission) in one or more time resources following a measurement gap, e.g.,
   ∘ not transmitting in a subframe occurring immediately after the measurement gap,
      or
   ∘ not transmitting in the uplink subframe occurring immediately after the measurement gap if the subframe occurring immediately before the measurement gap is a downlink subframe
- Adapting the transmissions periodicity to the measurement gap configuration/periodicity, e.g., increasing the number of configured transmissions when the transmissions may overlap with measurement gaps (e.g., increasing the periodicity of SRS transmissions, e.g., to have it larger than the measurement gap periodicity)
- Shifting transmissions related to SRS switching by at least V time resources relative to the time resources in which measurement gaps may be configured (e.g., to account for interruptions or delays in different UE components)
- delaying, pausing, resuming the wireless device 110A-C transmissions
- Not transmitting SRS in a time resource which occurs during a measurement gap.
- Transmitting SRS in not more than certain number of time resources which occur during the gaps. Examples of such rules are:
   ∘ Transmitting SRS in not more than G out of H measurement gaps, where H may correspond to H consecutive measurement gaps. In another examples H may correspond to H number of measurement gaps occurring in certain time period (T0).
- Transmitting SRS in a reference time resource with respect to the measurement gaps. This rule is elaborated with following examples:
   o Wireless device 110A-C is allowed to transmit SRS in a time resource occurring immediately before the measurement gap.
   ∘ Wireless device 110A-C is allowed to transmit SRS in a time resource occurring immediately after the measurement gap.
   ∘ Wireless device 110A-C is allowed to transmit SRS in a first available uplink time resource occurring immediately before the measurement gap. Examples of uplink time resources are uplink symbol, uplink subframe, special subframe, UpPTS etc.
   o Wireless device 110A-C is allowed to transmit SRS in a first available uplink time resource occurring immediately after the measurement gap.
   ∘ Wireless device 110A-C is allowed to transmit SRS in a time resource occurring within P1 time resources before the measurement gap.
   ∘ Wireless device 110A-C is allowed to transmit SRS in a time resource occurring within Q1 time resources after the measurement gap.
   ∘ Wireless device 110A-C is allowed to transmit SRS in an uplink time resource occurring within P1 time resources before the measurement gap.
   ∘ Wireless device 110A-C is allowed to transmit SRS in an uplink time resource occurring within Q1 time resources after the measurement gap.
- Wireless device 110A-C is allowed to transmit SRS in a measurement gap provided that the UE is not performing measurement in that measurement gap or if the UE has completed the measurements in gaps.
- Wireless device 110A-C is allowed to transmit SRS in a measurement gap provided that the UE can meet one or more requirements associated with the measurements performed using measurement gaps e.g. Wireless device 110A-C is allowed to transmit SRS in a measurement gap provided measurement time of the measurement is not extended.
- Wireless device 110A-C is allowed to transmit SRS on a carrier, F1, in a measurement gap provided that wireless device 110A-C is also performing one or more measurements in F1 in the measurement gap.
- Wireless device 110A-C is allowed to transmit SRS on a carrier, F1, in a measurement gap provided that wireless device 110A-C is also performing one or more measurements in F1 and the transmission of SRS in the gap shall not adversely affect the performance of the measurements on F1 in the gaps.
- Wireless device 110A-C is allowed to transmit SRS on a carrier, F1, in a measurement gap provided that the wireless device 110A-C is also performing one or more measurements in F1 and the UE can still meet one or more requirements associated with the measurements performed on F1 in the gaps.
- Wireless device 110A-C may transmit SRS in a measurement gap however in this case wireless device 110A-C is allowed to meet a second set of measurement requirements for the measurement performed in measurement gaps. If wireless device 110A-C does not transmit SRS in a measurement gap then wireless device 110A-C is required to meet a first set of measurement requirements for the measurement performed in measurement gaps. The first set of measurement requirements is more stringent than the second set of measurement requirements. For example shorter measurement time (e.g. first set) is more stringent requirement compared to longer measurement time (e.g. second set).
- Wireless device 110A-C is allowed to transmit SRS in a measurement gap selectively e.g. when one or more conditions or criteria are met. For example;
   ∘ Wireless device 110A-C is allowed to transmit SRS in a measurement gap provided that wireless device 110A-C has not transmitted SRS during the last J number of time resources.
   ∘ Wireless device 110A-C is allowed to transmit SRS in a measurement gap provided that the wireless device 110A-C has not transmitted SRS during the last L number of SRS transmission occasions.
   ∘ Wireless device 110A-C is allowed to transmit SRS on a carrier, F1, in a measurement gap provided that the HARQ performance of DL signal reception on serving cell on F1 is worse than a threshold. For example if HARQ BLER for PDSCH reception is larger than Z1% then the UE is allowed to transmit SRS in a measurement gap e.g. in P1 gaps every Q1 measurement gaps, or until HARQ BLER becomes lower than Z2% where Z2 < Z1.
- If wireless device 110A-C transmits SRS during the measurement time (T1) but not in the gaps used for performing the measurement (i.e. wireless device 110A-C transmits SRS between the gaps or the time available for measurements on intra-frequency or serving carrier) then the minimum time available for serving carrier(s) frequency measurements (e.g. intra-frequency measurements) is reduced. In this case wireless device 110A-C is allowed to relax one or more intra-frequency measurement requirements. For example, wireless device 110A-C is allowed one or more of the following:
   ∘ Extend the measurement time (e.g. measurement period, cell search delay etc.) compared to the case when no SRS are transmitted during T1,
   ∘ Perform measurements on fewer numbers of cells on serving carrier(s) compared to the case when no SRS are transmitted during T1.
- If the SRS transmission coincides with an autonomous gap used for acquiring system information of a cell, then wireless device 110A-C is not allowed to transmit SRS in that autonomous gap.
- If the SRS transmission coincides with an autonomous gap used for acquiring system information (SI) of a cell, then wireless device 110A-C is allowed to transmit SRS in that autonomous gap. However, in this case wireless device 110A-C is allowed to extend the SI acquisition time.
- If wireless device 110A-C transmits SRS during the SI acquisition time (T2) but not in the autonomous gaps used for acquiring the SI (i.e. wireless device 110A-C transmits SRS between the autonomous gaps) then wireless device 110A-C is allowed to meet a second set of requirement in terms of number (R2) of missed ACK/NACK transmissions by wireless device 110A-C under continuous DL allocation of data during T2, Wireless device 110A-C is required to meet a first set of requirement in terms of number (R1) of missed ACK/NACK transmissions by wireless device 110A-C under continuous DL allocation of data provided that wireless device 110A-C does not transmit any SRS during T2, where R2 < R1. R2 may depend on number of SRS transmitted during T2. For example, R1 = 60 and R2 = 55 assuming SRS are transmitted in 5 time resources during T2.
- If the SRS transmission coincides with an autonomous gap used for acquiring system information (SI) of a cell then:
   ∘ wireless device 110A-C is not allowed to transmit SRS in that autonomous gap and
   o if wireless device 110A-C transmits SRS during (T2) then wireless device 110A-C is allowed to meet a second set of requirement in terms of number (R2) of missed ACK/NACK transmissions by wireless device 110A-C under continuous DL allocation of data during T2, Wireless device 110A-C is required to meet a first set of requirement in terms of number (R1) of missed ACK/NACK transmissions by wireless device 110A-C under continuous DL allocation of data provided that wireless device 110A-C does not transmit any SRS during T2, where R2 < R1 as in the previous example.

In certain embodiments, some or any of the above rules may also apply, provided additional conditions are met:
• SRS is transmitted in a certain symbol of the subframe (e.g., when the SRS is transmitted in the last symbol of the subframe wireless device 110A-C can e.g. transmit this SRS in the subframe immediately after the measurement gap but not before the measurement gap; or when the SRS is transmitted not later than nth symbol of the subframe then it can be allowed to transmit before the measurement gap)

In certain embodiments, the adapted configuration of reception(s) of the second radio signals may include, for example, one or more of:
- Configuring in time resources for measurement gaps to avoid/reduce/minimize the overlap with transmissions related to SRS switching
- Configuring measurement gap periodicity and/or length adaptively to the transmissions periodicity (e.g., reduce the length to avoid the overlap with SRS transmissions, increase the periodicity configuration e.g. from 40 ms to 80 ms)
- Using measurement gaps based on priority (e.g., not using at least some measurement gaps giving the priority to SRS transmissions)
- Dropping at most P or Q% of measurement gaps and corresponding radio signal receptions
- Using at least S or R% of measurement gaps
- Performing the operation in time resources to avoid/reduce/minimize the overlap with transmissions related to SRS switching
- Performing the operation without measurement gaps in some or all subframes overlapping with the transmissions related to SRS switching
- Shifting measurement gaps by at least W time resources relative to the time resources for transmissions related to SRS switching

At step 408, wireless device 110A-C transmits the at least one first radio signal subject to SRS switching in accordance with the adapted first configuration while applying the second configuration. According to certain embodiments, the at least one first signal is transmitted on a first carrier during the measurement gap without adversely affecting the performance of a measurement based on the at least one second signal received on the first carrier during the measurement gap according to the second configuration. Thus, according to certain embodiments, the first radio signal, which is subject to SRS switching, is transmitted according to the adapted configuration while respecting the measurement gaps associated with the second configuration such that any measurement requirement associated with the measurement gaps can be met.

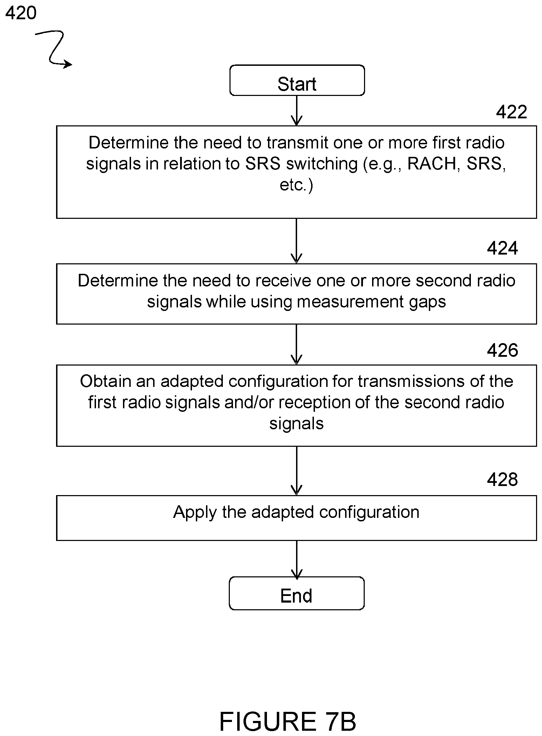

FIGURE 7B illustrates another exemplary method 420 by a wireless device for configuring measurement gaps and SRS switching, in accordance with certain embodiments. The method begins at step 422 when wireless device 110A-C determines the need to transmit one or more of first radio signals in relation to SRS switching (e.g., RACH SRS, etc.). In certain embodiments, the determination may be based on one or more of:
- Message, indication or configuration received from another node (e.g., from a network node) via higher layers and/or physical layer, e.g., SRS carrier switching configuration, SRS transmission configuration related to SRS switching, etc.;
- Pre-defined configuration, e.g. SRS switching pattern; and
- Triggering condition or event which may trigger one or more transmissions related to SRS switching, e.g. collapse of SRS transmission timer for any carrier, etc.

At step 424, wireless device 110A-C determines the need to receive one or more of second radio signals while using measurement gaps. Measurement gaps may be network- and/or UE-configured gaps or autonomous gaps. The determination may be based, for example, on one or more of:
- Message/indication/configuration received from another node (e.g., network node), including, for example, measurement configuration, system information configuration;
- Pre-defined configurations or rules;
- Configuration (which may be e.g. pre-defined such as transmissions in certain subframes and/or with certain periodicity) of signals to be received to perform an operation (e.g., SI reading, cell identification, positioning);
- Triggering events and/or conditions, which may trigger one or more operations based on reception of radio signals which may need measurement gaps; and
- UE capability, e.g., whether the UE is capable or not of performing inter-frequency and/or inter-RAT measurements without measurement gaps in general or for a specific purpose.

At step 426, wireless device 110A-C obtains an adapted configuration for transmissions of the first radio signals and/or reception of the second radio signals. In a particular embodiment, wireless device 110A-C may further indicate the adapted configuration to another node (e.g., network node 115A-C or another UE 119A-C). For example, wireless device 110A-C may recommend a measurement gap configuration or indicate a configuration which is used or to be used by wireless device 110A-C. In another particular embodiment, obtaining the adapted configuration may further include obtaining of at least one performance characteristic, requirement, or target. In still another embodiment, obtaining the adapted configuration may include performing the adaptation with respect to the obtained performance characteristic/requirement/target.

Some examples of the performance characteristic, requirement or target are: intra-frequency, inter-frequency and/or inter-RAT measurement time, measurement period, cell identification, SI reading time, CGI identification time, positioning (e.g., OTDOA or E-CID) measurement period, RLM time, measurement accuracy (e.g. ± 3 dB of RSRP accuracy etc.), minimum number of identified cells to be measured by the wireless device 110A-C, signal level down to which the requirement is to be met etc. The requirement may also be expressed in terms of the number of lost packets. This may further be expressed in terms of total number of missed ACK/NACK in response to continuous transmission of data to wireless device 110A-C from its serving cell over certain time period e.g. measurement time period.

The term requirements may also be interchangeably called as measurement requirement, performance requirement etc.

Examples for radio measurement types are described above.

In embodiments, obtaining the adapted configuration may be based on one or more of:
- Message/indication/configuration received from another node (e.g., network node), e.g., the UE may receive the adapted configuration or parameter(s) controlling how the UE would adapt;
- Pre-defined rule e.g. rules pre-defined in the standard.
- Priority(ies) (e.g., between SRS switching operation or transmissions related to SRS switching and using measurement gaps or operations that may need measurement gaps), e.g., the priorities may be pre-defined or received from another node or determined based on a pre-defined rule.
- History Beside changing a periodicity for switching between carriers, in certain embodiments, the adapted configuration of transmission(s) of the first radio signals may also include, for example, one or more of:
- Adapting carrier switching for SRS transmissions purpose (e.g., adapting the time when to switch to a carrier or from a carrier or switching periodicity, etc.), e.g.,
   ∘ Fully or partly avoiding or reducing the overlap between switching or related interruptions time with measurement gaps or adjacent to gaps time resources
- Transmitting/not transmitting based on priority (e.g., not transmitting SRS when measurement gaps are used for a specific purpose)
- Transmitting of at least N or X% of transmissions,
- Dropping of at most M or Y% transmissions,
- Transmitting in a time resource to avoid/reduce/minimize overlap with measurement gaps
- Transmitting in a different (e.g., pre-defined or defined based on a rule) time resource than originally scheduled, to avoid overlap with measurement gaps
- Not transmitting (e.g., avoiding transmitting or dropping a transmission) in one or more time resources following a measurement gap, e.g.,
   ∘ not transmitting in a subframe occurring immediately after the measurement gap, or
   ∘ not transmitting in the uplink subframe occurring immediately after the measurement gap if the subframe occurring immediately before the measurement gap is a downlink subframe
- Adapting the transmissions periodicity to the measurement gap configuration/periodicity, e.g., increasing the number of configured transmissions when the transmissions may overlap with measurement gaps (e.g., increasing the periodicity of SRS transmissions, e.g., to have it larger than the measurement gap periodicity)
- Shifting transmissions related to SRS switching by at least V time resources relative to the time resources in which measurement gaps may be configured (e.g., to account for interruptions or delays in different UE components)
- delaying, pausing, resuming the wireless device 110A-C transmissions
- Not transmitting SRS in a time resource which occurs during a measurement gap.
- Transmitting SRS in not more than certain number of time resources which occur during the gaps. Examples of such rules are:
   ∘ Transmitting SRS in not more than G out of H measurement gaps, where H may correspond to H consecutive measurement gaps. In another examples H may correspond to H measurement gaps occurring in certain time period (T0).
- Transmitting SRS in a reference time resource with respect to the measurement gaps. This rule is elaborated with following examples:
   o Wireless device 110A-C is allowed to transmit SRS in a time resource occurring immediately before the measurement gap.
   ∘ Wireless device 110A-C is allowed to transmit SRS in a time resource occurring immediately after the measurement gap.
   o Wireless device 110A-C is allowed to transmit SRS in a first available uplink time resource occurring immediately before the measurement gap. Examples of uplink time resources are uplink symbol, uplink subframe, special subframe, upPTS etc.
   o Wireless device 110A-C is allowed to transmit SRS in a first available uplink time resource occurring immediately after the measurement gap.
   ∘ Wireless device 110A-C is allowed to transmit SRS in a time resource occurring within P1 time resources before the measurement gap.
   ∘ Wireless device 110A-C is allowed to transmit SRS in a time resource occurring within Q1 time resources after the measurement gap.
   ∘ Wireless device 110A-C is allowed to transmit SRS in an uplink time resource occurring within P1 time resources before the measurement gap.
   ∘ Wireless device 110A-C is allowed to transmit SRS in an uplink time resource occurring within Q1 time resources after the measurement gap.
- Wireless device 110A-C is allowed to transmit SRS in a measurement gap provided that the UE is not performing measurement in that measurement gap or if the UE has completed the measurements in gaps.
- Wireless device 110A-C is allowed to transmit SRS in a measurement gap provided that the UE can meet one or more requirements associated with the measurements performed using measurement gaps e.g. Wireless device 110A-C is allowed to transmit SRS in a measurement gap provided measurement time of the measurement is not extended.
- Wireless device 110A-C is allowed to transmit SRS on a carrier, F1, in a measurement gap provided that wireless device 110A-C is also performing one or more measurements in F1 in the measurement gap.
- Wireless device 110A-C is allowed to transmit SRS on a carrier, F1, in a measurement gap provided that wireless device 110A-C is also performing one or more measurements in F1 and the transmission of SRS in the gap shall not adversely affect the performance of the measurements on F1 in the gaps.
- Wireless device 110A-C is allowed to transmit SRS on a carrier, F1, in a measurement gap provided that the wireless device 110A-C is also performing one or more measurements in F1 and the UE can still meet one or more requirements associated with the measurements performed on F1 in the gaps.
- Wireless device 110A-C may transmit SRS in a measurement gap however in this case wireless device 110A-C is allowed to meet a second set of measurement requirements for the measurement performed in measurement gaps. If wireless device 110A-C does not transmit SRS in a measurement gap then wireless device 110A-C is required to meet a first set of measurement requirements for the measurement performed in measurement gaps. The first set of measurement requirements is more stringent than the second set of measurement requirements. For example shorter measurement time (e.g. first set) is more stringent requirement compared to longer measurement time (e.g. second set).
- Wireless device 110A-C is allowed to transmit SRS in a measurement gap selectively e.g. when one or more conditions or criteria are met. For example:
   ∘ Wireless device 110A-C is allowed to transmit SRS in a measurement gap provided that wireless device 110A-C has not transmitted SRS during the last J time resources.
   ∘ Wireless device 110A-C is allowed to transmit SRS in a measurement gap provided that the wireless device 110A-C has not transmitted SRS during the last L SRS transmission occasions.
   ∘ Wireless device 110A-C is allowed to transmit SRS on a carrier, F1, in a measurement gap provided that the HARQ performance of DL signal reception on serving cell on F1 is worse than a threshold. For example if HARQ BLER for PDSCH reception is larger than Z1% then the UE is allowed to transmit SRS in a measurement gap e.g. in P1 gaps every Q1 measurement gaps, or until HARQ BLER becomes lower than Z2% where Z2 < Z1.
- If wireless device 110A-C transmits SRS during the measurement time (T1) but not in the gaps used for performing the measurement (i.e. wireless device 110A-C transmits SRS between the gaps or the time available for measurements on intra-frequency or serving carrier) then the minimum time available for serving carrier(s) frequency measurements (e.g. intra-frequency measurements) is reduced. In this case wireless device 110A-C is allowed to relax one or more intra-frequency measurement requirements. For example, wireless device 110A-C is allowed one or more of the following:
   ∘ Extend the measurement time (e.g. measurement period, cell search delay etc.) compared to the case when no SRS are transmitted during T1,
   ∘ Perform measurements on fewer numbers of cells on serving carrier(s) compared to the case when no SRS are transmitted during T1.
- If the SRS transmission coincides with an autonomous gap used for acquiring system information of a cell, then wireless device 110A-C is not allowed to transmit SRS in that autonomous gap.
- If the SRS transmission coincides with an autonomous gap used for acquiring system information (SI) of a cell, then wireless device 110A-C is allowed to transmit SRS in that autonomous gap. However in this case wireless device 110A-C is allowed to extend the SI acquisition time.
- If wireless device 110A-C transmits SRS during the SI acquisition time (T2) but not in the autonomous gaps used for acquiring the SI (i.e. wireless device 110A-C transmits SRS between the autonomous gaps) then wireless device 110A-C is allowed to meet a second set of requirement in terms of number (R2) of missed ACK/NACK transmissions by wireless device 110A-C under continuous DL allocation of data during T2, Wireless device 110A-C is required to meet a first set of requirement in terms of number (R1) of missed ACK/NACK transmissions by wireless device 110A-C under continuous DL allocation of data provided that wireless device 110A-C does not transmit any SRS during T2, where R2 < R1. R2 may depend on the number of SRS transmitted during T2. For example R1 = 60 and R2 = 55 assuming SRS are transmitted in 5 time resources during T2.
- If the SRS transmission coincides with an autonomous gap used for acquiring system information (SI) of a cell, then:
   ∘ wireless device 110A-C is not allowed to transmit SRS in that autonomous gap and
   ∘ if wireless device 110A-C transmits SRS during (T2) then wireless device 110A-C is allowed to meet a second set of requirement in terms of number (R2) of missed ACK/NACK transmissions by wireless device 110A-C under continuous DL allocation of data during T2, Wireless device 110A-C is required to meet a first set of requirement in terms of number (R1) of missed ACK/NACK transmissions by wireless device 110A-C under continuous DL allocation of data provided that wireless device 110A-C does not transmit any SRS during T2, where R2 < R1 as in the previous example.

In certain embodiments, some or any of the above rules may also apply, provided additional conditions are met:
- SRS is transmitted in a certain symbol of the subframe (e.g., when the SRS is transmitted in the last symbol of the subframe wireless device 110A-C can e.g. transmit this SRS in the subframe immediately after the measurement gap but not before the measurement gap; or when the SRS is transmitted not later than nth symbol of the subframe then it can be allowed to transmit before the measurement gap)

In certain embodiments, the adapted configuration of reception(s) of the second radio signals may include, for example, one or more of:
- Configuring in time resources for measurement gaps to avoid/reduce/minimize the overlap with transmissions related to SRS switching
- Configuring measurement gap periodicity and/or length adaptively to the transmissions periodicity (e.g., reduce the length to avoid the overlap with SRS transmissions, increase the periodicity configuration e.g. from 40 ms to 80 ms)
- Using measurement gaps based on priority (e.g., not using at least some measurement gaps giving the priority to SRS transmissions)
- Dropping at most P or Q% of measurement gaps and corresponding radio signal receptions
- Using at least S or R% of measurement gaps
- Performing the operation in time resources to avoid/reduce/minimize the overlap with transmissions related to SRS switching
- Performing the operation without measurement gaps at least in some or all subframes overlapping with the transmissions related to SRS switching
- Shifting measurement gaps by at least W time resources relative to the time resources for transmissions related to SRS switching

At step 428, wireless device 110A-C may apply the adapted configuration. In certain embodiments, applying the adapted configuration may include, for example, transmitting one or more transmissions related to SRS switching and/or receiving one or more radio signals, based on the obtained adapted configuration. According to certain embodiments, the first radio signal, which is subject to SRS switching, is transmitted according to the adapted configuration while respecting the measurement gaps associated with the second configuration such that any measurement requirement associated with the measurement gaps can be met.

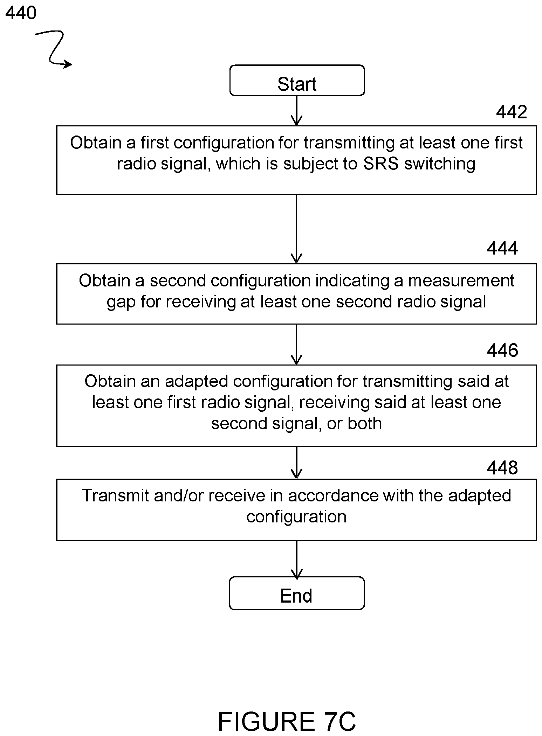

FIGURE 7C illustrates another exemplary method 440 by a wireless device 110A-C for configuring measurement gaps and SRS switching, in accordance with certain embodiments. The method may begin at step 442 when a first wireless device 110A-C, which may include a UE in particular embodiments, obtains a first configuration for transmitting at least one first radio signal, which is subject to SRS switching.

At step 444, the second wireless device 110A-C obtains a second configuration indicating a measurement gap for receiving at least one second radio signal.

At step 446, the second wireless device 110A-C obtains an adapted configuration for transmitting said at least one first radio signal, receiving said at least one second radio signal, or both. In certain embodiments, the adapted configuration may be obtained by obtaining at least one performance characteristic, requirement or target. Additionally or alternatively, the adapted configuration may be obtained by determining the adapted configuration in accordance with said at least one performance characteristic requirement or target.

At step 448, the second wireless device 110A-C transmits and/or receives in accordance with the adapted configuration. Thus, the first radio signal, which is subject to SRS switching, is transmitted according to the adapted configuration while respecting the measurement gaps associated with the second configuration such that any measurement requirement associated with the measurement gaps can be met.

Optionally, the method may include indicating the adapted configuration to a network node 115A-C or a second wireless device 110A-C.

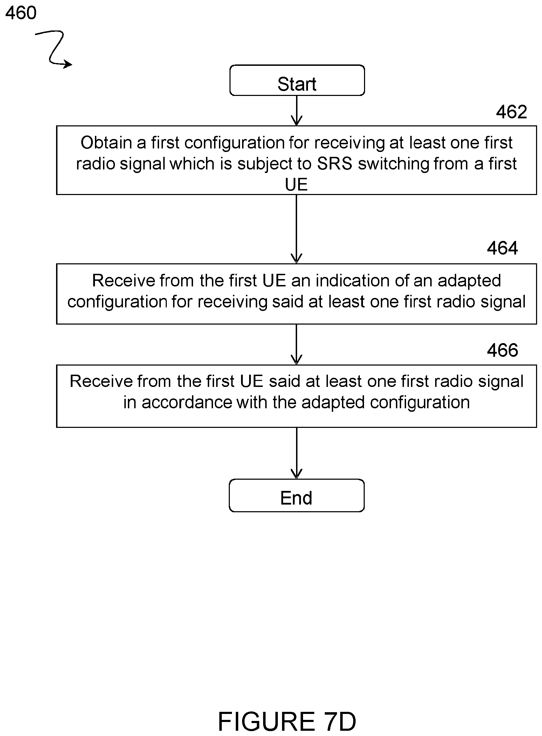

FIGURE 7D illustrates another exemplary method 460 by a wireless device 110A-C for configuring measurement gaps and SRS switching, in accordance with certain embodiments. The method may begin at step 462 when a second wireless device 110A-C obtains a first configuration for receiving at least one first radio signal, which is subject to SRS switching.

At step 464, the second wireless device 110A-C receives from the first wireless device 110A-C an indication of an adapted configuration for receiving said at least one first radio signal.

At step 466, the second wireless device 110A-C receives from the first wireless device 110A-C said at least one first radio signal in accordance with the adapted configuration.

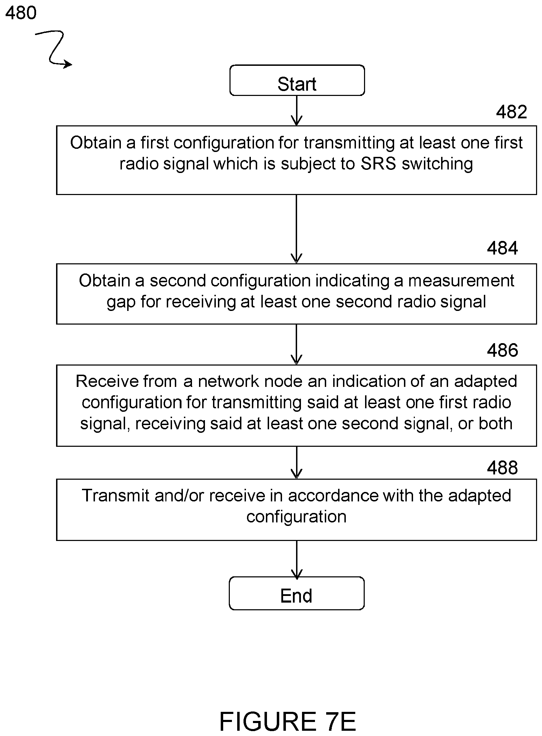

FIGURE 7E illustrates another exemplary method 480 by a wireless device 110A-C for configuring measurement gaps and SRS switching, in accordance with certain embodiments. The method may begin at step 482 when a first wireless device 110A-C obtains a first configuration for transmitting at least one first radio signal which is subject to SRS switching.

At step 484, the first wireless device 110A-C obtains a second configuration indication a measurement gap for receiving at least one second radio signal.

At step 486, the first wireless device 110A-C receives from a network node 115A-C an indication of an adapted configuration for transmitting said at least one first radio signal or receiving said at least one second radio signal or both.

At step 488, the first wireless device 110A-C transmits and/or receives in accordance with the adapted configuration. Thus, according to certain embodiments, the first radio signal, which is subject to SRS switching, is transmitted according to the adapted configuration while respecting the measurement gaps associated with the second configuration such that any measurement requirement associated with the measurement gaps can be met.

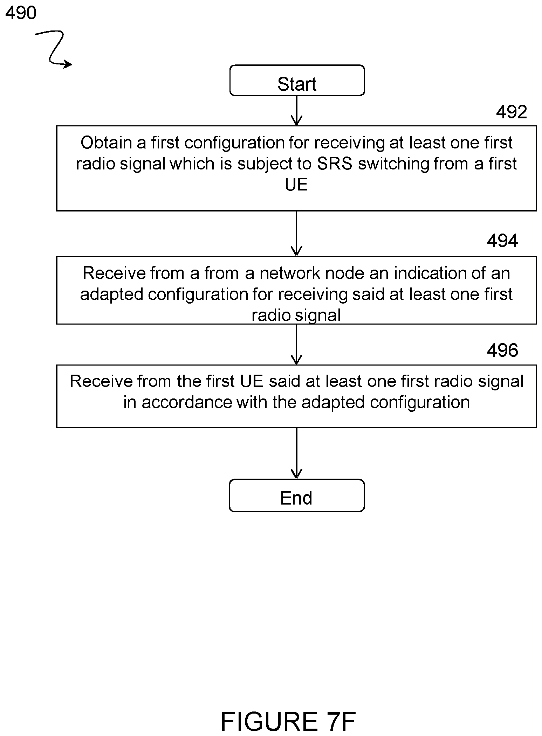

FIGURE 7F illustrates another exemplary method 490 by a second wireless device 110A-C for configuring measurement gaps and SRS switching, in accordance with certain embodiments. The method may begin at step 492 when a second wireless device 110A-C obtains a first configuration for receiving at least one first radio signal, which is subject to SRS switching from a first wireless device 110A-C.

At step 494, the second wireless device 110A-C receives from a network node 115A-C an indication of an adapted configuration for receiving said at least one first radio signal.

At step 496, the second wireless device 110A-C receives from the first wireless device 110A-C said at least one first radio signal in accordance with the adapted configuration.

In certain embodiments, the methods for configuring measurement gaps and sounding reference signal switching as described above may be performed by a virtual computing device.

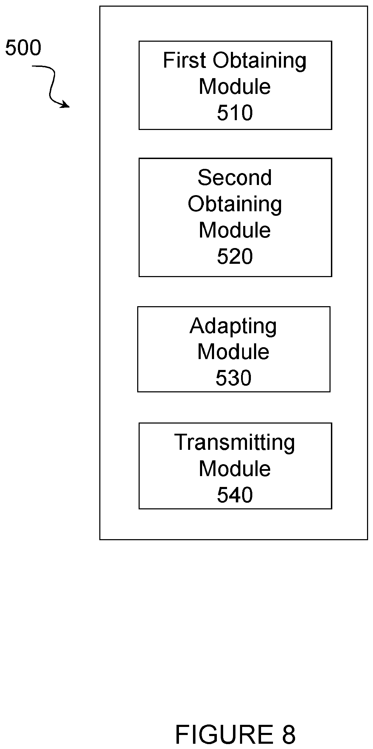

FIGURE 8 illustrates an example virtual computing device 500 for configuring measurement gaps and sounding reference signal switching, according to certain embodiments. In certain embodiments, virtual computing device 500 may include modules for performing steps similar to those described above with regard to any of the methods illustrated and described in FIGURE 7A. For example, virtual computing device 700 may include a first obtaining module 510, a second obtaining module 520, an adapting module 530, a transmitting module 540, and any other suitable modules for configuring measurement gaps and sounding reference signal switching as disclosed above with regard to FIGURE 7A. In some embodiments, one or more of the modules may be implemented using one or more processors 220 of FIGURE 5 to perform any of the steps described above. In certain embodiments, the functions of two or more of the various modules may be combined into a single module.

The first obtaining module 510 may perform certain of the obtaining functions of virtual computing device 500. For example, in a particular embodiment, first obtaining module 510 may obtain a first configuration for transmitting at least one first radio signal subject to SRS switching.

The second obtaining module 520 may perform certain other of the obtaining functions of virtual computing device 500. For example, in a particular embodiment, second obtaining module 520 may obtain a second configuration indicating a measurement gap for receiving at least one second radio signal.

The adapting module 530 may perform the adapting functions of virtual computing device 500. For example, in a particular embodiment, adapting module 530 may adapt the first configuration for transmitting the at least one first radio signal subject to SRS switching while applying the second configuration.

The transmitting module 540 may perform the transmitting functions of virtual computing device 500. For example, in a particular embodiment, transmitting module 540 may transmit the at least one first radio signal subject to SRS switching in accordance with the adapted first configuration while applying the second configuration.

Other embodiments of virtual computing device 500 may include additional components beyond those shown in FIGURE 8 that may be responsible for providing certain aspects of the wireless device's 110A-C functionality, including any of the functionality described above and/or any additional functionality (including any functionality necessary to support the solutions described above). Alternatively, virtual computing device 500 may include fewer components. As just one example, a single obtaining module may perform the functions described above relating to first obtaining module 510 and second obtaining module 520, according to a particular embodiment. The various different types of wireless devices 110A-C may include components having the same physical hardware but configured (e.g., via programming) to support different radio access technologies, or may represent partly or entirely different physical components.

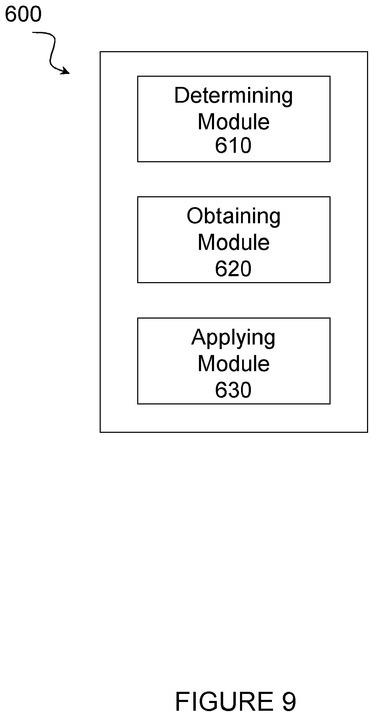

FIGURE 9 illustrates another example virtual computing device 600 for configuring measurement gaps and sounding reference signal switching, according to certain embodiments. In certain embodiments, virtual computing device 600 may include modules for performing steps similar to those described above with regard to any of the methods illustrated and described in FIGURES 7B-7F. For example, and just one example, virtual computing device 600 may include at least one determining module 610, a obtaining module 620, an applying module 630, and any other suitable modules for configuring measurement gaps and sounding reference signal switching as disclosed above with regard to FIGURE 7B. In some embodiments, one or more of the modules may be implemented using one or more processors 220 of FIGURE 5 to perform any of the steps described above. In certain embodiments, the functions of two or more of the various modules may be combined into a single module.

The determining module 610 may perform the determining functions of virtual computing device 600. For example, in a particular embodiment, determining module 610 may determine the need to transmit one or more first radio signals in relation to SRS switching (e.g., RACH, SRS, etc.). As another example, determining module 610 or another determining module 610 may also determine the need to receive one or more second radio signals while using measurement gaps.

The obtaining module 620 may perform the obtaining functions of virtual computing device 600. For example, in a particular embodiment, obtaining module 620 may obtain an adapted configuration for transmissions of the first radio signals and/or reception of the second radio signals.

The applying module 630 may perform the applying functions of virtual computing device 600. For example, in a particular embodiment, applying module 630 may apply the adapted configuration.

Other embodiments of virtual computing device 600 may include additional components beyond those shown in FIGURE 6 that may be responsible for providing certain aspects of the wireless device's 110A-C functionality, including any of the functionality described above and/or any additional functionality (including any functionality necessary to support the solutions described above). The various different types of wireless devices 110A-C may include components having the same physical hardware but configured (e.g., via programming) to support different radio access technologies, or may represent partly or entirely different physical components.

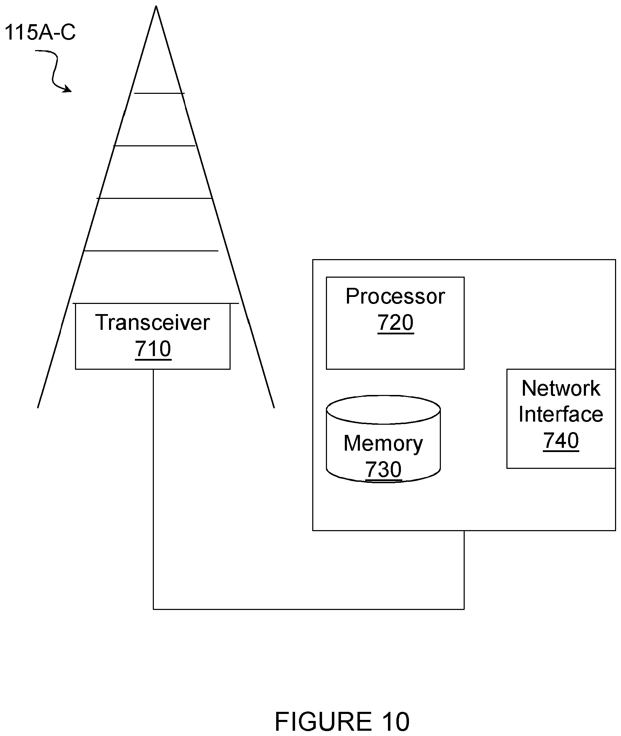

FIGURE 10 illustrate an example network node 115A-C for configuring measurement gaps and sounding reference signal switching, according to certain embodiments. As described above, network node 115A-C may be any type of radio network node or any network node that communicates with a wireless device and/or with another network node. Examples of a network node 115A-C are provided above.

Network nodes 115A-C may be deployed throughout network 100 as a homogenous deployment, heterogeneous deployment, or mixed deployment. A homogeneous deployment may generally describe a deployment made up of the same (or similar) type of network nodes 115A-C and/or similar coverage and cell sizes and inter-site distances. A heterogeneous deployment may generally describe deployments using a variety of types of network nodes 115A-C having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115A-C may include one or more of transceiver 710, processor 720, memory 730, and network interface 740. In some embodiments, transceiver 710 facilitates transmitting wireless signals to and receiving wireless signals from wireless device 110A-C (e.g., via an antenna), processor 720 executes instructions to provide some or all of the functionality described above as being provided by a network node 115, memory 730 stores the instructions executed by processor 720, and network interface 740 communicates signals to backend network components, such as a gateway, switch, router, Internet, Public Switched Telephone Network (PSTN), core network nodes or radio network controllers, etc.

In certain embodiments, network node 115A-C may be capable of using multi-antenna techniques, and may be equipped with multiple antennas and capable of supporting MIMO techniques. The one or more antennas may have controllable polarization. In other words, each element may have two co-located sub elements with different polarizations (e.g., 90 degree separation as in cross-polarization), so that different sets of beamforming weights will give the emitted wave different polarization.

Processor 720 may include any suitable combination of hardware and software implemented in one or more modules to execute instructions and manipulate data to perform some or all of the described functions of network node 115A-C. In some embodiments, processor 720 may include, for example, processing circuitry, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processor 720 and may refer to any suitable device operable to receive input for network node 115A-C, send output from network node 115A-C, perform suitable processing of the input or output or both, communicate to other devices, or any combination of the preceding. Network interface 640 may include appropriate hardware (e.g., port, modem, network interface card, etc.) and software, including protocol conversion and data processing capabilities, to communicate through a network.

Other embodiments of network node 115A-C may include additional components beyond those shown in FIGURE 10 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components. Additionally, the terms first and second are provided for example purposes only and may be interchanged.

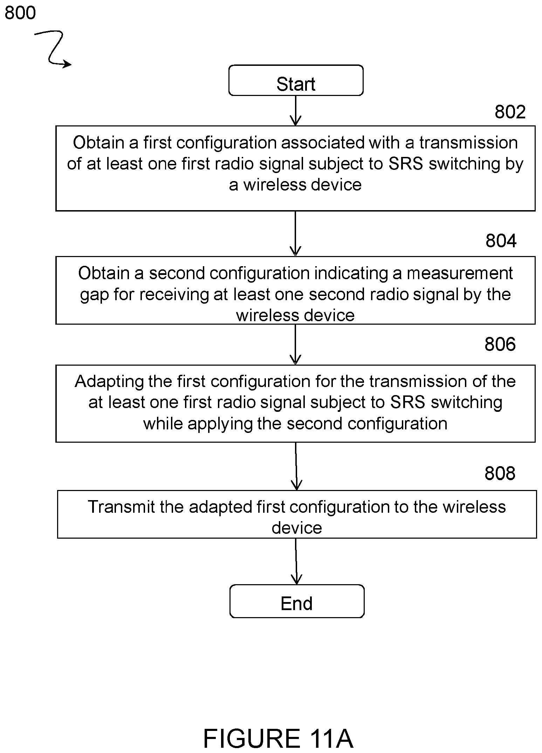

FIGURES 11A-11D illustrate exemplary methods by a radio node 115A-C, in accordance with certain embodiments. Specifically, FIGURE 11A illustrates an exemplary method 800 in a network node 115A-C for configuring measurement gaps and SRS switching, in accordance with certain embodiments. The method begins at step 802 when network node 115A-C obtains a first configuration associated with a transmission of at least one first radio signal subject to SRS switching by a wireless device 110A-C.

At step 804, network node 115A-C obtains a second configuration indicating a measurement gap for receiving at least one second radio signal by the wireless device. In certain embodiments, the obtaining of the second configuration for receiving the second radio signals may be based, for example, on one or more of:
- Message or configuration received from another node (e.g., UE or another network node), e.g., with a UE-recommended configuration, UE capability, a configuration based on SON or O&M
- Pre-defined rules
- History
- Presence of UEs performing SRS switching and/or UEs which that may not be able to transmit during inter-frequency or inter-RAT operations
- Priorities (e.g., adapt DL transmission configuration if SRS switching related transmissions have a higher priority)

At step 806, network node 115A-C adapts the first configuration for the transmission by the wireless device 110A-C of the at least one first radio signal subject to SRS switching while applying the second configuration. In a particular embodiment, network node 115A-C may receive the adapted first configuration from wireless device 110A-C.

The adapted first configuration changes a periodicity for switching between carriers to avoid or reduce an overlap with the measurement gap of the second configuration. According to certain embodiments, adapting the first configuration may include obtaining at least one performance characteristic, requirement, or target and adapting the first configuration in accordance with said at least one performance characteristic, requirement, or target. According to a particular embodiment, for example, network node 115A-C may determine that that one or more measurement requirements will be met while the wireless device 110A-C performs measurements associated with the at least one second signal according to the second configuration and transmits the at least one first signal according to the adapted first configuration.

According to various particular embodiments, the adapted first configuration may identify a percentage of SRS transmissions allowed for transmission by the wireless device 110A-C, a percentage of SRS transmissions to be dropped by the wireless device 110A-C, a number of SRS transmissions allowed for transmission by the wireless device 110A-C, and/or a number of SRS transmissions to be dropped by the wireless device 110A-C. Additionally or alternatively, the adapted first configuration may identify a time resource for transmitting the at least one first signal to reduce an overlap with the measurement gap, a time resource for transmitting the at least one first signal that does not occur during the measurement gap, and/or a time resource for not transmitting the at least one first signal to avoid or reduce an overlap with the measurement gap.

According to certain embodiments, the adapting of first configuration may further include, for example, one or more of:
- Adapting for wireless devices not capable of receiving signals without measurement gaps
- Adapting based on the capability of simultaneous transmissions/receptions by the wireless devices
- Configuring the DL transmissions in time resources so to avoid/reduce/minimize the overlap with the wireless device's transmissions related to SRS switching
- Configuring signal periodicity adaptively to the wireless device transmissions periodicity (e.g., transmit more frequently in DL accounting for the inability to receive due to SRS transmissions)
- Configuring wireless device operation or the beginning of the wireless device operation to avoid/reduce/minimize the overlap with the transmissions related to SRS switching,
- Ensuring that an offset between the DL transmissions and transmissions related to SRS switching is at least W time resources
- Delaying/postponing/resuming transmissions

At step 808, network node 115A-C transmits the adapted first configuration to the wireless device 110A-C. According to certain embodiments, the first radio signal, which is subject to SRS switching, is transmitted according to the adapted configuration while respecting the measurement gaps associated with the second configuration such that any measurement requirement associated with the measurement gaps can be met. Thus, the first radio signal, which is subject to SRS switching, is transmitted according to the adapted configuration while respecting the measurement gaps associated with the second configuration such that any measurement requirement associated with the measurement gaps can be met.

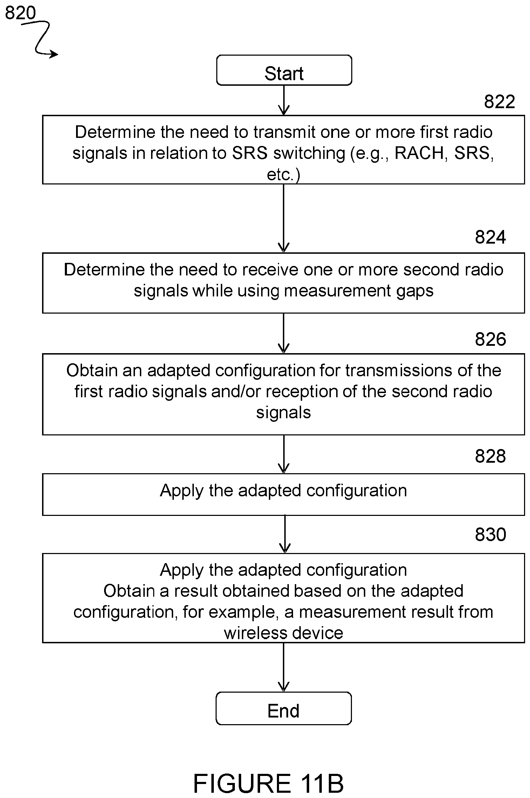

FIGURE 11B illustrates an exemplary method 820 by a radio node that begins at step 822 when network node 115A-C determines for at least one wireless device 110A-C the need to transmit one or more of first radio signals in relation to SRS switching (e.g., RACH, SRS, etc.). In certain embodiments, this step may be as was described above in FIGURE 7B related to wireless device 110A-C. In still other embodiments, network node 115A-C may be aware of the wireless device's transmission configuration and/or SRS switching configuration and may, thus, determine the need.

At step 824, network node 115A-C may determine for the at least one wireless device 110A-C the need to receive one or more of second radio signals while using measurement gaps. In certain embodiments, this step may be as was described above in FIGURE 7B related to wireless device 110A-C. In another embodiment, network node 115A-C may be aware of the transmission configuration of the signals wireless device 110A-C is going to receive and may thus determine the need. In still other embodiments, the determining step may include network node 115A-C additionally or alternatively using the capability information received from wireless device 110A-C

At step 826, network node 115A-C may obtain an adapted configuration for wireless device's 110A-C transmissions of the first radio signals and/or wireless device's reception of the second radio signals and/or transmission configuration of the second radio signals. In certain embodiments, network node 115A-C may obtain at least one performance characteristic, requirement, or target. In other embodiments, network node 115A-C may perform the adaptation with respect to the obtained performance characteristic/requirement/target. Again, the methods and rules may be similar to those described above with regard to FIGURE 7B related to wireless device 110A-C.

In certain embodiments, the obtaining of the transmission configuration of the second radio signals may be based, for example, on one or more of:
- Message or configuration received from another node (e.g., UE or another network node), e.g., with a UE-recommended configuration, UE capability, a configuration based on SON or O&M
- Pre-defined rules
- History
- Presence of UEs performing SRS switching and/or UEs which that may not be able to transmit during inter-frequency or inter-RAT operations
- Priorities (e.g., adapt DL transmission configuration if SRS switching related transmissions have a higher priority)

The adapting of transmission configuration of the second radio signals may further include, for example, one or more of:
- Adapting to suit UEs which are not capable of receiving signals without measurement gaps
- Adapting based on the UE capability of simultaneous transmissions/receptions
- Configuring the DL transmissions in time resources so to avoid/reduce/minimize the overlap with the UE's transmissions related to SRS switching
- Configuring signal periodicity adaptively to the UE transmissions periodicity (e.g., transmit more frequently in DL accounting for the inability to receive due to SRS transmissions)
- Configuring UE operation or the beginning of the UE operation to avoid/reduce/minimize the overlap with the transmissions related to SRS switching,
- Ensuring that an offset between the DL transmissions and transmissions related to SRS switching is at least W time resources
- Delaying/postponing/resuming transmissions

At step 828, network node 115A-C may apply the adapted configuration. In certain embodiments, applying of the adapted configuration may include, for example, based on the adapted configuration, configuring one or more of: SRS switching, transmissions related to SRS switching, measurement gaps, second radio signals transmissions.

At step 830, network node 115A-C may obtain a result obtained based on the adapted configuration, for example, a measurement result from wireless device 110A-C, a radio signal transmission from wireless device 110A-C, the wireless device's measurement gap configuration, etc.

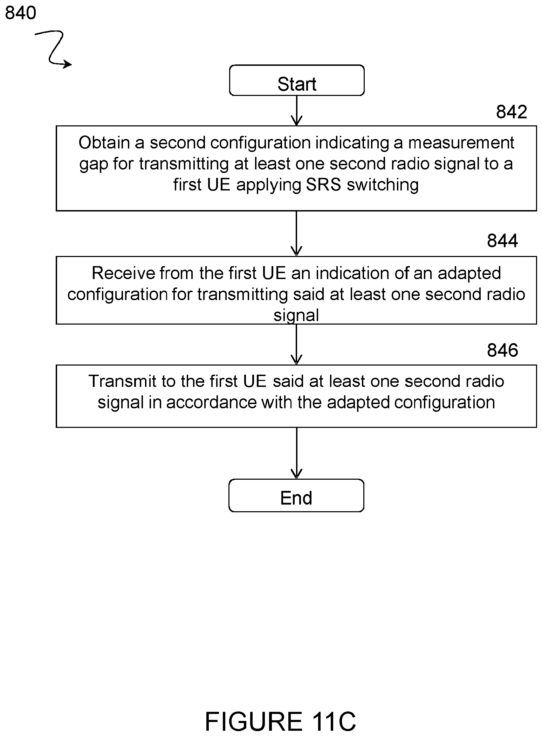

FIGURE 11C illustrates another exemplary method 840 by a network node 115A-C for configuring measurement gaps and SRS switching, in accordance with certain embodiments. The method may begin at step 842 when a network node obtains a second configuration indicating a measurement gap for transmitting at least one second radio signal to a first wireless device 110A-C applying SRS switching. The first wireless device 110A-C may include a UE in a particular embodiment.

At step 844, the network node 115A-C receives from the first wireless device 110A-C an indication of an adapted configuration for transmitting said at least one second radio signal.

At step 846, the network node 115A-C transmits to the first wireless device 110A-C said at least one second radio signal in accordance with the adapted configuration. Thus, according to certain embodiments, the first radio signal, which is subject to SRS switching, is transmitted according to the adapted configuration while respecting the measurement gaps associated with the second configuration such that any measurement requirement associated with the measurement gaps can be met.

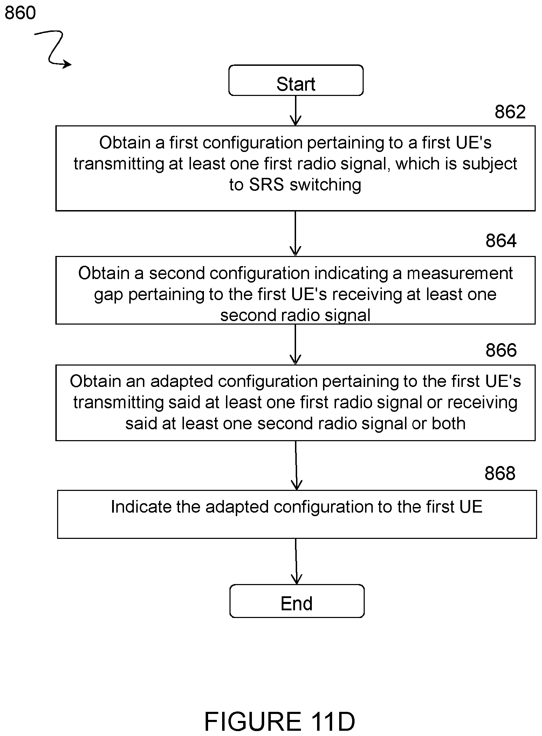

FIGURE 11D illustrates another exemplary method 860 by a network node 115A-C for configuring measurement gaps and SRS switching, in accordance with certain embodiments. The method may begin at step 862 when a network node 115A-C obtains a first configuration pertaining to a first wireless device's transmitting at least one first radio signal which is subject to SRS switching. The first wireless device 110A-C may include a UE in a particular embodiment.

At step 864, the network node 115A-C obtains a second configuration indicating a measurement gap pertaining to the first wireless device's 110A-C receiving at least one second radio signal.

At step 866, the network node 115A-C obtains an adapted configuration pertaining to the first wireless device's 110A-C transmitting said at least one first radio signal or receiving said at least one second radio signal or both.

At step 868, the network node 115A-C indicates the adapted configuration to the first wireless device 110A-C.

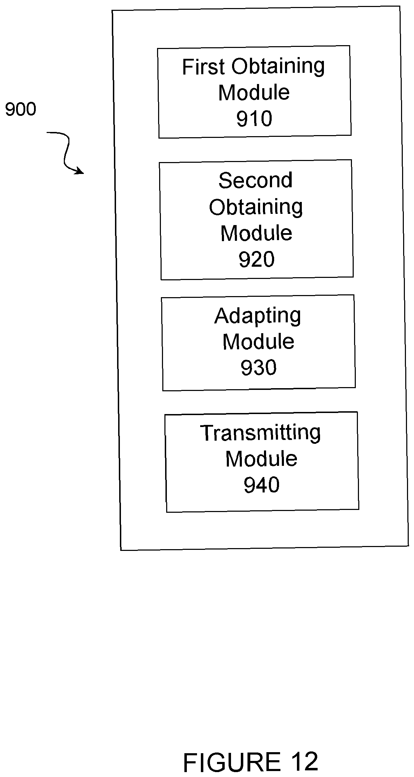

In certain embodiments, the methods for configuring measurement gaps and sounding reference signal switching as described above may be performed by a virtual computing device. FIGURE 12 illustrates an example virtual computing device 900 for configuring measurement gaps and sounding reference signal switching, according to certain embodiments. In certain embodiments, virtual computing device 900 may include modules for performing steps similar to those described above with regard to any of the methods illustrated and described in FIGURE 11A. For example, virtual computing device 900 may include a first obtaining module 910, a second obtaining module 920, an adapting module 930, a transmitting module 940, and any other suitable modules for configuring measurement gaps and sounding reference signal switching as disclosed above with regard to FIGURE 11A. In some embodiments, one or more of the modules may be implemented using one or more processors 720 of FIGURE 10 to perform any of the steps described above. In certain embodiments, the functions of two or more of the various modules may be combined into a single module.

The first obtaining module 910 may perform certain of the obtaining functions of virtual computing device 900. For example, in a particular embodiment, first obtaining module 910 may obtain a first configuration associated with a transmission of at least one first radio signal subject to SRS switching by a wireless device 110A-C.

The second obtaining module 920 may perform certain other of the obtaining functions of virtual computing device 900. For example, in a particular embodiment, second obtaining module 920 may obtain a second configuration indicating a measurement gap for receiving at least one second radio signal by the wireless device 110A-C.

The adapting module 930 may perform the adapting functions of virtual computing device 900. For example, in a particular embodiment, adapting module 930 may adapt the first configuration for transmitting the at least one first radio signal subject to SRS switching while applying the second configuration.

The transmitting module 940 may perform the transmitting functions of virtual computing device 900. For example, in a particular embodiment, transmitting module 940 may transmit the adapted first configuration to the wireless device 110A-C.

Other embodiments of virtual computing device 900 may include additional components beyond those shown in FIGURE 12 that may be responsible for providing certain aspects of the network node's 115A-C functionality, including any of the functionality described above and/or any additional functionality (including any functionality 900 may include fewer components. As just one example, a single obtaining module may perform the functions described above relating to first obtaining module 910 and second obtaining module 920, according to a particular embodiment. The various different types of network nodes 115A-C may include components having the same physical hardware but configured (e.g., via programming) to support different radio access technologies, or may represent partly or entirely different physical components.

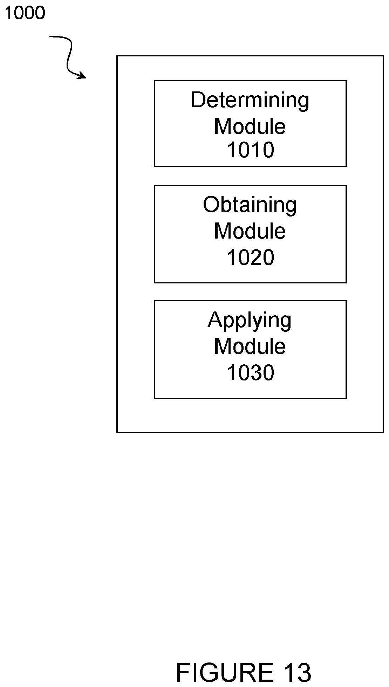

FIGURE 13 illustrates another example virtual computing device 1000 for configuring measurement gaps and sounding reference signal switching, according to certain embodiments. In certain embodiments, virtual computing device 1000 may include modules for performing steps similar to those described above with regard to any of the methods illustrated and described in FIGURES 11B-11D. For example, and just one example, virtual computing device 1000 may include at least one determining module 1010, a obtaining module 1020, an applying module 1014, and any other suitable modules for configuring measurement gaps and sounding reference signal switching as disclosed above with regard to FIGURE 11B. In some embodiments, one or more of the modules may be implemented using one or more processors 720 of FIGURE 10 to perform any of the steps described above. In certain embodiments, the functions of two or more of the various modules may be combined into a single module.

The determining module 1010 may perform the determining functions of virtual computing device 1000. For example, in a particular embodiment, determining module 1010 may determine the need to transmit one or more first radio signals in relation to SRS switching (e.g., RACH, SRS, etc.). As another example, determining module 1010 or another determining module 1010 may also determine the need to receive one or more second radio signals while using measurement gaps.

The obtaining module 1020 may perform the obtaining functions of virtual computing device 1000. For example, in a particular embodiment, obtaining module 1020 may obtain an adapted configuration for transmissions of the first radio signals and/or reception of the second radio signals. As another example, obtaining module 1020 may obtain a result obtained based on the adapted configuration after it is applied. For example obtaining module 1020 may obtain a measurement result from wireless device 110A-C.

The applying module 1030 may perform the applying functions of virtual computing device 1000. For example, in a particular embodiment, applying module 1030 may apply the adapted configuration.

Other embodiments of virtual computing device 1000 may include additional components beyond those shown in FIGURE 13 that may be responsible for providing certain aspects of the network node's 115A-C functionality, including any of the functionality described above and/or any additional functionality (including any functionality necessary to support the solutions described above). The various different types of network nodes 115A-C may include components having the same physical hardware but configured (e.g., via programming) to support different radio access technologies, or may represent partly or entirely different physical components.

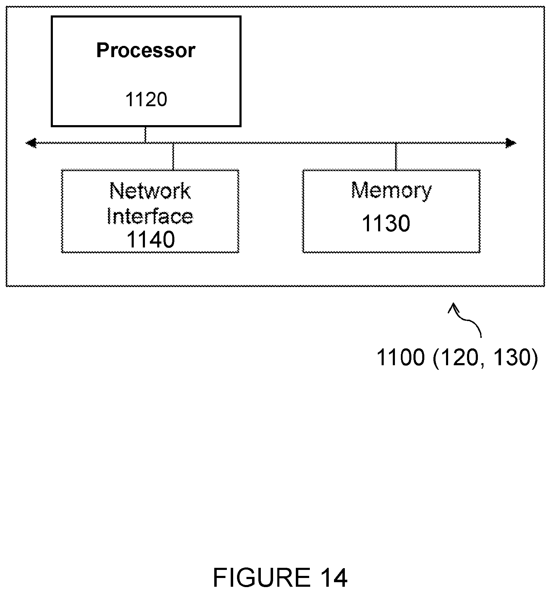

FIGURE 14 illustrates an exemplary radio network controller or core network node 1100, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 1100 include processor 1120, memory 1130, and network interface 1140. In some embodiments, processor 1120 executes instructions to provide some or all of the functionality described above as being provided by the network node, memory 1130 stores the instructions executed by processor 1120, and network interface 1140 communicates signals to any suitable node, such as a gateway, switch, router, Internet, Public Switched Telephone Network (PSTN), network nodes 115, radio network controllers or core network nodes 900, etc.

Processor 1120 may include any suitable combination of hardware and software implemented in one or more modules to execute instructions and manipulate data to perform some or all of the described functions of the radio network controller or core network node 1100. In some embodiments, processor 1120 may include, for example, processing circuitry, one or more computers, one or more central processing units (CPUs), one or more microprocessors, one or more applications, and/or other logic.

Memory 1130 is generally operable to store instructions, such as a computer program, software, an application including one or more of logic, rules, algorithms, code, tables, etc. and/or other instructions capable of being executed by a processor. Examples of memory 1130 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1140 is communicatively coupled to processor 1120 and may refer to any suitable device operable to receive input for the network node, send output from the network node, perform suitable processing of the input or output or both, communicate to other devices, or any combination of the preceding. Network interface 1140 may include appropriate hardware (e.g., port, modem, network interface card, etc.) and software, including protocol conversion and data processing capabilities, to communicate through a network.

Other embodiments of the network node may include additional components beyond those shown in FIGURE 14 that may be responsible for providing certain aspects of the network node's functionality, including any of the functionality described above and/or any additional functionality (including any functionality necessary to support the solution described above).

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. The scope of this disclosure is defined by the following claims.

## Claims

1. A method (400) implemented in a radio node for configuring measurement gaps and sounding reference signal , SRS, switching, comprising:
obtaining a first configuration for transmitting at least one first radio signal subject to SRS switching,
wherein the first configuration comprises SRS transmission configuration related to the SRS switching among carriers and/or antennas and the first radio signal is an SRS signal;
obtaining a second configuration indicating a measurement gap for receiving at least one second radio signal; and
adapting the first configuration for transmitting the at least one first radio signal subject to SRS switching while applying the second configuration, **characterised in that** the adapted first configuration changes a periodicity for switching between carriers to avoid or reduce an overlap with the measurement gap of the second configuration.

2. The method of claim 1, wherein the radio node is a wireless device (110A-C), and the method further comprises transmitting the at least one first radio signal subject to SRS switching in accordance with the adapted first configuration while applying the second configuration.

3. The method of Claim 2, wherein the adapted first configuration identifies at least one of:
a percentage of SRS transmissions allowed for transmission by the wireless device;
a percentage of SRS transmissions to be dropped by the wireless device;
a number of SRS transmissions allowed for transmission by the wireless device; and
a number of SRS transmissions to be dropped by the wireless device.

4. The method of Claim 2, wherein the adapted first configuration identifies at least one of:
a time resource for transmitting the at least one first signal to reduce an overlap with the measurement gap;
a time resource for transmitting the at least one first signal that does not occur during the measurement gap; and
a time resource for not transmitting the at least one first signal to avoid or reduce an overlap with the measurement gap.

5. The method of any one of Claims 2 to 4, wherein adapting the first configuration comprises:
obtaining at least one performance characteristic, requirement, or target; and
adapting the first configuration in accordance with said at least one performance characteristic, requirement, or target.

6. The method of any one of Claims 2 to 5, further comprising:
transmitting the adapted first configuration to a network node (115A-C) or another wireless device.

7. The method of any one of Claims 2 to 6, further comprising:
receiving the adapted first configuration from a network node (115A-C).

8. The method of claim 1, wherein the radio node is a network node (115A-C), and the method further comprises transmitting the adapted first configuration to a wireless device (110A-C).

9. A radio node for configuring measurement gaps and sounding reference signal, SRS, switching, the radio node comprising:
a memory (230) storing instructions; and
a processor (220) adapted to execute the instructions to cause the
radio node to:
obtain a first configuration for transmitting at least one first radio signal subject to SRS switching,
wherein the first configuration comprises SRS transmission configuration related to the SRS switching among carriers and/or antennas and the first radio signal is an SRS signal;
obtain a second configuration indicating a measurement gap for receiving at least one second radio signal; and
adapt the first configuration for transmitting the at least one first radio signal subject to SRS switching while applying the second configuration, **characterised in that** the adapted first configuration changes a periodicity for switching between carriers to avoid or reduce an overlap with the measurement gap of the second configuration.

10. The radio node of claim 9, wherein the radio node is a wireless device (110A-C), and the processor is further adapted to transmit the at least one first radio signal subject to SRS switching in accordance with the adapted first configuration while applying the second configuration.

11. The radio node of claim 9, wherein the radio node is a network node (115A-C) and the processor is further adapted to transmit the adapted first configuration to a wireless device (110A-C).

## Patentansprüche

1. Verfahren (400), das in einem Funkknoten implementiert ist, zum Konfigurieren von Messlücken und für eine Sondierungsreferenzsignal-(SRS)-Umschaltung, das Folgendes umfasst:
Erhalten einer ersten Konfiguration zum Übertragen wenigstens eines ersten Funksignals, das einer SRS-Umschaltung unterzogen wird,
wobei die erste Konfiguration eine SRS-Übertragungskonfiguration umfasst, die sich auf die SRS-Umschaltung unter Trägern und/oder Antennen bezieht und das erste Funksignal ein SRS-Signal ist;
Erhalten einer zweiten Konfiguration, die eine Messlücke zum Empfangen wenigstens eines zweiten Funksignals anzeigt; und
Anpassen der ersten Konfiguration zum Übertragen des wenigstens einen ersten Funksignals, das der SRS-Umschaltung unterzogen wird, während die zweite Konfiguration angewendet wird, **dadurch gekennzeichnet, dass** die angepasste erste Konfiguration eine Periodizität zum Umschalten zwischen Trägern ändert, um eine Überlappung mit der Messlücke der zweiten Konfiguration zu vermeiden oder zu verringern.

2. Verfahren nach Anspruch 1, wobei der Funkknoten eine drahtlose Vorrichtung (110A-C) ist und das Verfahren ferner das Übertragen des wenigstens einen ersten Funksignals, das der SRS-Umschaltung unterzogen wird, gemäß der angepassten ersten Konfiguration umfasst, während die zweite Konfiguration angewendet wird.

3. Verfahren nach Anspruch 2, wobei die angepasste erste Konfiguration Folgendes identifiziert:
einen Prozentsatz von SRS-Übertragungen, die für eine Übertragung durch die drahtlose Vorrichtung zugelassen sind;
einen Prozentsatz von SRS Übertragungen, die durch die drahtlose Vorrichtung fallen gelassen werden sollen;
eine Anzahl von SRS-Übertragungen, die für die Übertragung durch die drahtlose Vorrichtung zugelassen sind; und/oder
eine Anzahl von SRS-Übertragungen, die durch die drahtlose Vorrichtung fallen gelassen werden sollen.

4. Verfahren nach Anspruch 2, wobei die angepasste erste Konfiguration wenigstens Folgendes identifiziert:
eine Zeitressource zum Übertragen des wenigstens einen ersten Signals, um eine Überlappung mit der Messlücke zu verringern;
eine Zeitressource zum Übertragen des wenigstens einen ersten Signals, das nicht während der Messlücke auftritt; und/oder
eine Zeitressource zum Nicht-Übertragen des wenigstens einen ersten Signals, um eine Überlappung mit der Messlücke zu vermeiden oder zu verringern.

5. Verfahren nach einem der Ansprüche 2 bis 4, wobei das Anpassen der ersten Konfiguration Folgendes umfasst:
Erhalten von wenigstens einem Leistungsmerkmal, -erfordernis oder-ziel; und
Anpassen der ersten Konfiguration gemäß dem wenigstens einen Leistungsmerkmal, -erfordernis oder -ziel.

6. Verfahren nach einem der Ansprüche 2 bis 5, das ferner Folgendes umfasst:
Übertragen der angepassten ersten Konfiguration an einen Netzknoten (115A-C) oder eine andere drahtlose Vorrichtung.

7. Verfahren nach einem der Ansprüche 2 bis 6, das ferner Folgendes umfasst:
Empfangen der angepassten ersten Konfiguration von einem Netzknoten (115A-C).

8. Verfahren nach Anspruch 1, wobei der Funkknoten ein Netzknoten (115A-C) ist und das Verfahren ferner das Übertragen der angepassten ersten Konfiguration an eine drahtlose Vorrichtung (110A-C) umfasst.

9. Funkknoten zum Konfigurieren von Messlücken und für die Sondierungsreferenzsignal(SRS)-Umschaltung, wobei der Funkknoten Folgendes umfasst:
einen Speicher (230), der Anweisungen speichert; und
einen Prozessor (220), der angepasst ist, um die Anweisungen auszuführen, um den Funkknoten zu Folgendem zu veranlassen:
Erhalten einer ersten Konfiguration zum Übertragen wenigstens eines ersten Funksignals, das der SRS-Umschaltung unterzogen wird,
wobei die erste Konfiguration eine SRS-Übertragungskonfiguration umfasst, die sich auf die SRS-Umschaltung unter Trägern und/oder Antennen bezieht und das erste Funksignal ein SRS-Signal ist;
Erhalten einer zweiten Konfiguration, die eine Messlücke zum Empfangen wenigstens eines zweiten Funksignals anzeigt; und
Anpassen der ersten Konfiguration zum Übertragen des wenigstens einen ersten Funksignals, das der SRS-Umschaltung unterzogen wird, während die zweite Konfiguration angewendet wird, **dadurch gekennzeichnet, dass** die angepasste erste Konfiguration eine Periodizität zum Umschalten zwischen Trägern ändert, um eine Überlappung mit der Messlücke der zweiten Konfiguration zu vermeiden oder zu verringern.

10. Funkknoten nach Anspruch 9, wobei der Funkknoten eine drahtlose Vorrichtung (110A-C) ist und der Prozessor ferner angepasst ist, um das wenigstens eine erste Funksignal, das der SRS-Umschaltung unterzogen wird, gemäß der angepassten ersten Konfiguration zu übertragen, während die zweite Konfiguration angewendet wird.

11. Funkknoten nach Anspruch 9, wobei der Funkknoten ein Netzknoten (115A-C) ist und der Prozessor ferner angepasst ist, um die angepasste erste Konfiguration an eine drahtlose Vorrichtung (110A-C) zu übertragen.

## Revendications

1. Procédé (400) mis en œuvre dans un nœud radio destiné à configurer des écarts de mesure et une commutation de signal de référence de sondage (SRS) comprenant :
l'obtention d'une première configuration de transmission d'au moins un premier signal radio soumis à une commutation SRS,
dans lequel la première configuration comprend une configuration de transmission SRS liée à la commutation SRS entre des porteuses et/ou des antennes et le premier signal radio est un signal SRS ;
l'obtention d'une seconde configuration indiquant un écart de mesure pour recevoir au moins un second signal radio ; et
l'adaptation de la première configuration destinée à transmettre l'au moins un premier signal radio soumis à la commutation SRS tout en appliquant la seconde configuration, **caractérisé en ce que** la première configuration adaptée modifie une périodicité de commutation entre porteuses pour éviter ou réduire un chevauchement avec l'écart de mesure de la seconde la configuration.

2. Procédé selon la revendication 1, dans lequel le nœud radio est un dispositif sans fil (110A-C), et le procédé comprend en outre la transmission de l'au moins un premier signal radio soumis à la commutation SRS conformément à la première configuration adaptée tout en appliquant la seconde configuration.

3. Procédé selon la revendication 2, dans lequel la première configuration adaptée identifie au moins l'un parmi :
un pourcentage de transmissions SRS autorisées pour la transmission par le dispositif sans fil ;
un pourcentage de transmissions SRS à abandonner par le dispositif sans fil ;
un certain nombre de transmissions SRS autorisées pour la transmission par le dispositif sans fil ; et
un certain nombre de transmissions SRS à abandonner par le dispositif sans fil.

4. Procédé selon la revendication 2, dans lequel la première configuration adaptée identifie :
une ressource de temps destinée à transmettre l'au moins un premier signal afin de réduire un chevauchement avec l'écart de mesure ; et/ou
une ressource de temps destinée à transmettre l'au moins un premier signal qui ne se produit pas pendant l'écart de mesure ; et/ou
une ressource de temps destinée à ne pas transmettre l'au moins un premier signal afin d'éviter ou de réduire un chevauchement avec l'écart de mesure.

5. Procédé selon l'une quelconque des revendications 2 à 4, dans lequel l'adaptation de la première configuration comprend :
l'obtention d'au moins une caractéristique, exigence ou cible de performance ; et
l'adaptation de la première configuration conformément à ladite au moins une caractéristique, exigence ou cible de performance.

6. Procédé selon l'une quelconque des revendications 2 à 5, comprenant en outre :
la transmission de la première configuration adaptée à un nœud de réseau (115A-C) ou à un autre dispositif sans fil.

7. Procédé selon l'une quelconque des revendications 2 à 6, comprenant en outre :
la réception de la première configuration adaptée d'un nœud de réseau (115A-C).

8. Procédé selon la revendication 1, dans lequel le nœud radio est un nœud de réseau (115A-C), et le procédé comprend en outre la transmission de la première configuration adaptée à un dispositif sans fil (110A-C).

9. Nœud radio destiné à configurer des écarts de mesure et la commutation d'un signal de référence de sondage (SRS), le nœud radio comprenant :
une mémoire (230) stockant des instructions ; et
un processeur (220) adapté pour exécuter les instructions afin d'amener le nœud radio à :
obtenir une première configuration de transmission d'au moins un premier signal radio soumis à une commutation SRS,
dans lequel la première configuration comprend une configuration de transmission SRS liée à la commutation SRS entre des porteuses et/ou des antennes et le premier signal radio est un signal SRS ;
obtenir une seconde configuration indiquant un écart de mesure pour recevoir au moins un second signal radio ; et
adapter la première configuration destinée à transmettre l'au moins un premier signal radio soumis à la commutation SRS tout en appliquant la seconde configuration, **caractérisé en ce que** la première configuration adaptée modifie une périodicité de commutation entre porteuses pour éviter ou réduire un chevauchement avec l'écart de mesure de la seconde la configuration.

10. Nœud radio selon la revendication 9, dans lequel le nœud radio est un dispositif sans fil (110A-C), et le processeur est en outre adapté pour transmettre l'au moins un premier signal radio soumis à la commutation SRS conformément à la première configuration adaptée tout en appliquant le seconde configuration.

11. Nœud radio selon la revendication 9, dans lequel le nœud radio est un nœud de réseau (115A-C) et le processeur est en outre adapté pour transmettre la première configuration adaptée à un dispositif sans fil (110A-C).
